(19) Europäisches Patentamt
European Patent Office
Office européen des brevets

(11) **EP 4 461 762 A1**

(12) **EUROPÄISCHE PATENTANMELDUNG**

(43) Veröffentlichungstag:
**13.11.2024 Patentblatt 2024/46**

(21) Anmeldenummer: **23172723.1**

(22) Anmeldetag: **11.05.2023**

(51) Internationale Patentklassifikation (IPC):
***C08G 65/26*** *(2006.01)*

(52) Gemeinsame Patentklassifikation (CPC):
**C08G 65/2609; C08G 65/2663**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
• **Lorenz, Klaus**
**41539 Dormagen (DE)**
• **Danek, Ingo**
**50765 Köln (DE)**

(74) Vertreter: **Levpat**
**c/o Covestro AG**
**Gebäude K12**
**51365 Leverkusen (DE)**

(54) **VERFAHREN ZUR HERSTELLUNG EINER MISCHUNG ENTHALTEND EIN POLYOXYALKYLENPOLYOL; MISCHUNG UND VERBINDUNGEN ERHÄLTLICH AUS DEM VERFAHREN**

(57)  Gegenstände der vorliegenden Erfindung sind Verfahren zur Herstellung einer Mischung enthaltend ein Polyoxyalkylenpolyol, bevorzugt ein Polyetherpolyol, die durch das Verfahren erhältliche Mischung sowie eine Mischung enthaltend ein Polyoxyalkylenpolyol, bevorzugt ein Polyetherpolyol und eine alkoxylierte Sauerstoffsäure des Phosphors.

EP 4 461 762 A1

**Beschreibung**

Gegenstände der vorliegenden Erfindung sind Verfahren zur Herstellung einer Mischung enthaltend ein Polyoxyalkylenpolyol, bevorzugt ein Polyetherpolyol, die durch das Verfahren erhältliche Mischung sowie eine Mischung enthaltend ein Polyoxyalkylenpolyol, bevorzugt ein Polyetherpolyol und eine alkoxylierte Sauerstoffsäure des Phosphors.

Für die Herstellung von Polyurethanen geeignete Polyoxyalkylenpolyole können über verschiedene Herstellverfahren erhalten werden. Von großtechnischer Bedeutung ist zum einen die basisch katalysierte Anlagerung von Alkylenoxiden an H-funktionelle Starterverbindungen, zum anderen die Verwendung von Doppelmetallcyanidverbindungen als Katalysatoren ("DMC-Katalysatoren") für die Anlagerung von Alkylenoxiden an H-funktionelle Starterverbindungen. Die Herstellung kurzkettiger Polyoxyalkylenpolyole mit Hydroxylzahlen (OH-Zahlen) größer als ca. 300 mg KOH / g ist mit DMC-Katalysatoren jedoch kaum realisierbar, da diese in Ggw. hoher Konzentrationen von Hydroxylgruppen nur geringe Aktivitäten aufweisen bzw. sich in Ggw. hoher Konzentrationen an Hydroxylgruppen nicht aktivieren lassen. Die durch (Lewis-)Säuren katalysierte Anlagerung von Alkylenoxiden an geeignete Starterverbindungen ist aufgrund der Neigung zur Bildung unerwünschter niedermolekularer Nebenprodukte, insbesondere im Falle der Herstellung langkettiger Polyoxyalkylenpolyole, von untergeordneter Bedeutung. Amine können grundsätzlich als Katalysatoren für die Addition von Alkylenoxiden an Starterverbindungen eingesetzt werden, als besonders geeignet haben sich hierbei heterocyclische Amine wie beispielsweise Imidazol und seine Derivate erwiesen. Mit diesen Katalysatoren sind OH-Zahlen von minimal etwa 200 mg KOH / g zugänglich (Äquivalentmolmasse ca. 280 g / mol). Als nachteilig bei der Verwendung von Aminkatalysatoren erweist sich in vielen Fällen, dass ihre im Endprodukt verbliebenen Reste Polyurethansystemen eine häufig unerwünschte Reaktivität verleihen. Für die Herstellung kurzkettiger Polyoxyalkylenpolyole mit hohen OH-Zahlen von 400 mg KOH / g oder höher stellt die Säurekatalyse im Prinzip eine technisch interessante Alternative zur Basenkatalyse dar, da die Neigung zur Bildung von niedermolekularen Nebenprodukten in diesem Hydroxylzahlbereich noch wenig ausgeprägt ist. Technisch besonders attraktiv erscheint den Autoren in diesem Zusammenhang die Verwendung der Sauerstoffsäuren des Phosphors, hier vor Allem der Phosphorsäure selbst, als Katalysatoren, da diese durch Alkoxylierung in ihre Ester umgewandelt werden und damit ohne weitere Aufarbeitungsschritte qualitativ hochwertige kurzkettige katalysatorrestfreie oder nur geringe Katalysatorspuren enthaltende Polyoxyalkylenpolyole erhalten werden können. Vermutlich aufgrund genau der eigentlich vorteilhaften Tatsache, dass sich die katalytische Aktivität der Oxosäuren des Phosphors während der Alkylierung verliert, erweist es sich jedoch als außerordentlich schwierig, Polyole mit OH-Zahlen von weniger als 450 mg KOH / g unter ausschließlicher Katalyse einer Phosphoroxosäure zu erhalten, insbesondere dann, wenn die Endprodukte nicht zu hohe Gehalte an Phosphoroxosäureestern enthalten sollen.

Aufgabe der vorliegenden Erfindung war es daher, ein einfach durchzuführendes Verfahren bereitzustellen, mit dem sich Polyoxyalkylenpolyole im OH-Zahl-Bereich von 250 mg KOH / g bis 600 mg KOH / g erhalten lassen, die keine Alkali- oder Erdalkalimetallüberreste und auch sonst keine ggf. nachfolgende Verschäumungsreaktionen beeinflussende Katalysatorreste, wie beispielsweise größere Konzentrationen freier Amine enthalten. Das Verfahren sollte sich darüber hinaus durch eine glatte Aufnahme des Alkylenoxides auszeichnen.

Der Stand der Technik im Umfeld von (Lewis-)säurekatalysierten Verfahren, bzw. von Verfahren, die DMC- und Säurekatalyse miteinander kombinieren, stellt sich dar wie folgt:

In der EP 1125961 A1 werden hydrophobe Polyether mit mehr als 40 % primären OH-Gruppen, die ausschließlich auf Basis von Propylenoxid, d. h. ohne den Einsatz von Ethylenoxid, herstellbar sind, offenbart. Der hohe Gehalt an primären OH-Gruppen wird erreicht durch Verwendung von lewissauren Katalysatoren auf Basis Bor und Al mit Phenylresten. Insbesondere werden $B(C_6F_5)_3$ und $Al(C_6F_5)_3$ empfohlen. In den Beispielen kommt man mit sehr geringen Katalysatormengen aus, wenn dieser kontinuierlich mit dem Alkylenoxid zum Starter gegeben wird. Es werden in den Bsp. nur langkettige Polyole mit maximalen OH-Zahlen von 56 mg KOH / g hergestellt. Zu deren Herstellung werden vorgefertigte Alkylenoxidaddukte als Starter verwendet. Als Nachteil dieses offenbarten Verfahrens erweist sich die hohe Feuchtigkeitsempfindlichkeit des Tris(pentafluoro)-phenylborans bzw.-aluminiums. Auch in den Beispielen der EP 2415798 A1 wird ausschließlich der Lewis-saure Katalysator Tris(pentafluoro)phenylboran verwendet, hier jedoch mit dem Ziel, langkettige Polyether mit einem relativ niedrigen Gehalt an ungesättigten Endgruppen bei gleichzeitigem Einsatz von nur geringen Mengen Ethylenoxid zu erhalten.

Die Patentanmeldung WO 2016/064698 A1 offenbart ein 2-stufiges Verfahren zur Herstellung von Polyetherpolyolen mit einem hohen Gehalt an primären OH-Gruppen, gekennzeichnet dadurch, dass in einer 1. Stufe (ausgehend von einem Starter mit Molmasse < 1000 Da) unter DMC-Katalyse ein Zwischenprodukt erhalten wird, diesem Zwischenprodukt eine Lewis - Säure (bevorzugt Tris(pentafluorophenyl)boran) zugefügt wird und dann bei niedrigerer Temperatur als im DMC-katalysierten Schritt wiederum Epoxid zugeführt wird. Die notwendige Deaktivierung des DMC-Katalysators findet also offensichtlich durch Temperaturabsenkung statt. Nachteilig an diesem Verfahren ist, dass es für die Herstellung von kurzkettigen Polyolen ungeeignet ist (es werden nur Polyether mit Molmassen größer als 2500 Da hergestellt) und wiederum die Verwendung des feuchtigkeitsempfindlichen Katalysators Tris(pentafluorophenyl)boran).

Die beiden Patentanmeldungen WO 2017194709 A1 und WO 2012084762 A1 offenbaren 2-stufige Verfahren umfassend jeweils einen basen- und einen DMC-katalysierten Schritt zum Erhalt von Polyetherpolyolen mit OH-Zahlen > 200 mg KOH / g oder solchen mit OH-Zahlen zwischen 3 und 150 mg KOH / g. Bei diesen Verfahren werden robuste Katalysatoren verwendet und sie kommen ohne Abtrennung von Katalysatorresten aus; das in der WO 2017/194709 beanspruchte Verfahren ist zudem für die Herstellung von typischen kurzkettigen Hartschaumstoffpolyoxyalkylenpolyolen geeignet. Als nachteilig erweist sich jedoch, dass die erhaltenen Polyoxyalkylenpolyole nicht vollständig frei von Alkalimetallsalzen sind.

Die Anmeldung WO 2012/134849 A1 offenbart eine Reaktionssequenz aus einem supersäurekatalysierten Reaktionsschritt, gefolgt von einem DMC-Schritt, mit dem Ziel für Hartschaumanwendungen geeignete kurzkettige Polyoxyalkylenpolyole mit einem geringen Gehalt an primären OH-Gruppen aufarbeitungsfrei zu erhalten. Die Supersäure wird vor dem DMC-Schritt nicht abgetrennt, kann aber optional neutralisiert werden. Problematisch bei dem beanspruchten Verfahren ist die Verwendung der hochaggressiven Supersäure $CF_3SO_3H$, zudem hat sich im Rahmen der Arbeiten, die zur vorliegenden Erfindung geführt haben, überraschenderweise herausgestellt, dass die in WO 2012/134849 A1 angewandte Neutralisationsmethode die Aktivität des DMC-Katalysators in unvorteilhafter Weise beeinflusst.

Die Patentanmeldung WO 2005/118678 A1 beschreibt ein zweistufiges Verfahren zur Herstellung von phosphorhaltigen Polyethern über DMC-Katalyse: Die phosphorhaltigen Verbindungen, in der Regel sind dies Sauerstoffsäuren des Phosphors und deren teilveresterte Derivate, werden in einem ersten Schritt unkatalisiert mit 0,5 - 3 mol Alkylenoxid / OH-Gruppe versetzt. Nach Abreaktion des Epoxids in dieser ersten Stufe wird der DMC-Katalysator zugesetzt und nach unterschiedlichen Verfahren weiter mit Epoxid bis zum Erreichen der Zielmolmasse umgesetzt. Es wird betont, dass sich das Verfahren dadurch auszeichnet, dass keine Nachbehandlung der Vorstufe erforderlich ist, sondern die Vorstufe direkt dem DMC-katalysierten Alkoxylierungsschritt unterzogen werden kann. Die Zielmolmassen des Verfahrens liegen im Bereich langkettiger Polyoxyalkylenpolyole. Der Vorteil der Neutralisation der nach dem ersten Schritt im Zwischenprodukt verbliebenen Restsäurezahl, der sich insbesondere bei der Herstellung kurzkettiger Polyoxyalkylenpolyole unter Verwendung geringer DMC-Katalysatormengen zeigt, wurde nicht erkannt.

In der EP 2543689 wird ein kontinuierliches Verfahren zur Herstellung von Polyethern beansprucht, welches dadurch gekennzeichnet ist, dass im ersten Schritt der Reaktionskaskade ein (Lewis-)säurekatalysierter Schritt bei einer Temperatur unterhalb der typischen Aktivierungstemperatur für DMC-Katalysatoren durchgeführt wird. Man erhält in diesem Schritt ein intermediäres oligomeres Polyol. Der DMC-Katalysator kann bei diesem ersten Schritt schon zugegen sein. Im 2. Schritt der Reaktionskaskade wird die Temperatur auf Werte typisch für DMC-katalysierte Alkylenoxidadditionsprozesse angehoben und das fertige Polyol erhalten. Die Zielmolmassen dieses Verfahrens liegen ebenfalls im Bereich langkettiger Polyoxyalkylenpolyole Der verfahrenstechnische Vorteil der Neutralisation der nach Stufe 1 verbliebenen Restsäurezahl wurde von den Autoren ebenfalls nicht erkannt.

Dem bisherigen Stand der Technik ist daher kein Verfahren zu entnehmen, welches einen Zugang zu kurzkettigen Polyoxyalkylenpolyolen im OH-Zahl-Bereich von 300 bis 600 mg KOH / g unter Verwendung von aktiven Katalysatoren bzw. Katalysatormengen schafft, bei dem Katalysatorreste nicht abgetrennt werden müssen, keine feuchtigkeitsempfindlichen Lewissäuren oder aggressiven Supersäuren eingesetzt werden und bei dem weder Alkali- oder Erdalkalimetallreste noch größere Mengen an aminischen Katalysatorresten im Polyoxyalkylenpolyol verbleiben.

Die Aufgabe der vorliegenden Erfindung bestand daher darin, die Defizite der bisherigen im Stand der Technik beschriebenen Verfahren zu beseitigen.

Diese Aufgabe konnte überraschenderweise gelöst werden durch ein Verfahren zur Herstellung einer Mischung enthaltend ein Polyoxyalkylenpolyol, bevorzugt ein Polyetherpolyol umfassend folgende Schritte:

i. Bereitstellung einer Komponente (A), enthaltend ein Polyoxyalkylenpolyol A1) mit einer berechneten Hydroxylzahl ($OHZ_{A1}$) von 600 bis 1060 mg KOH / g durch

a) Umsetzung einer H-funktionellen Starterverbindung (B) mit einem Alkylenoxid (C) unter Verwendung einer Komponente (D), wobei die Komponente (D) eine Brønsted-Säure enthält, unter Bildung einer Zwischenstufe (E);
b) Zugabe eines Amins (F) zu der unter i-a) erhaltenen Zwischenstufe (E) unter Bildung der Komponente (A)

ii. Anschließende Umsetzung der Komponente (A) mit einem Alkylenoxid (G) in Anwesenheit eines DMC-Katalysators (H) zur Mischung enthaltend das Polyoxyalkylenpolyol;

wobei die Umsetzung in Schritt i.-a) in Abwesenheit einer Supersäure erfolgt, und wobei die gemäß Schritt i.-a) zuzugegebende, berechnete Menge an Brønsted-Säure von 0,5 Gew.-% - 5,0 Gew.-%, bevorzugt von 1,0 Gew.-% bis 4,5 Gew.-% und besonders bevorzugt von 1,5 Gew.-% bis 4,0 Gew.-%, bezogen auf die Gesamtmasse der Zwischenstufe (E), beträgt.

Das erfindungsgemäße Verfahren zeichnet sich außerdem durch eine glatte Aufnahme des Alkylenoxids in den Alkoxylierungsstufen i. und ii. aus. Insbesondere zeigt der in Stufe ii. verwendete DMC-Katalysator eine gute Aktivität auch bei niedrigen Konzentrationen von maximal 150 ppm, bezogen auf die gesamte Ansatzmasse, die sich durch einen nur geringen Druckanstieg während der Alkylenoxidadditionsphase manifestiert. Es wurde zudem gefunden, dass sich ein Wechsel des Reaktors zwischen den beiden Alkoxylierungsstufen ebenfalls vorteilhaft auf die Aufnahme des Epoxids in der unter DMC-Katalyse ablaufenden Stufe ii. auswirkt.

Nachfolgend wird das erfindungsgemäße Verfahren näher erläutert, wobei erfindungsgemäße Ausführungsformen in beliebiger Weise und Anzahl miteinander kombiniert werden können, insofern sich aus deren technischen Inhalt oder für den Fachmann in offensichtlicher Weise sich nicht das Gegenteil ergibt.

Erfindungsgemäß enthält die Mischung das Polyoxyalkylenpolyol, bevorzugt das Polyetherpolyol. Im erfindungsgemäßen Verfahren sind unter Polyoxyalkylenpolyolen Anlagerungsprodukte von einem oder mehreren Alkylenoxiden und optional einem oder mehreren Co-Monomeren wie beispielsweise $CO_2$ und/oder cyclischen Anhydriden an eine oder mehrere H-funktionelle Starterverbindungen in Gegenwart eines Katalysators wie beispielsweise des Doppelmetallcyanid-(DMC)-Katalysators (H) zu verstehen, wobei Polyetherpolyole, Polyetheresterpolyole, Polycarbonatpolyole, Polyethercarbonatpolyole oder Polyetherestercarbonatpolyole erhältlich sind.

In einer bevorzugten Ausführungsform des erfindungsgemäßen Verfahrens ist das Polyoxyalkylenpolyol ein Polyetherpolyol, wobei das Polyetherpolyol durch Anlagerung von einem oder mehreren Alkylenoxiden an eine oder mehrere H-funktionelle Starterverbindung in Gegenwart eines Katalysators wie beispielsweise des Doppelmetallcyanid (DMC)-Katalysators (H) erhältlich ist.

Gemäß der gängigen fachlichen Definition sind unter Brønsted-Säuren Stoffe zu verstehen, welche Protonen an einen zweiten Reaktionspartner, die sogenannte Bronsted-Base typischerweise im wässrigen Medium bei 25 °C übertragen können.

In einer Ausführungsform des erfindungsgemäßen Verfahrens oder der Erfindung weist das das in der Mischung enthaltene Polyoxyalkylenpolyol eine Äquivalentmasse von 93 bis 225g/ mol bevorzugt von 93 bis 190 g/ mol auf.

Unter der Äquivalentmolmasse aktive Wasserstoffatome enthaltender Materialien (H-funktioneller Starterverbindungen) ist die durch die Zahl der aktiven Wasserstoffatome geteilte Gesamtmasse des aktive Wasserstoffatome enthaltenden Materials zu verstehen. Im Falle von hydroxygruppenhaltigen Materialien (wie beispielsweise Polyoxyalkylenpolyolen) steht sie in folgender Beziehung zur OH-Zahl (OHZ, Hydroxylzahl):

$$\text{Äquivalentmolmasse} = (56100\ [\text{mg} / \text{mol}]) / (\text{OHZ}\ [\text{mg KOH/g}]) \qquad (I)$$

Die Ermittlung der Äquivalentmolmasse des Polyoxyalkylenpolyols erfolgt also gemäß Formel (I), wobei die die OHZ des Polyoxyalkylenpolyols nach DIN 53240 ermittelt oder spektroskopisch über NIR bestimmt werden kann. Bevorzugt wird die OHZ des Polyoxyalkylenpolyols nach DIN 53240-2 (2007) ermittelt.

Die berechnete OH-Zahl des Polyoxyalkylenpolyols A1) ($OHZ_{A1}$) wird nach Formel (II) bestimmt:

$$\text{Äquivalentmolmasse} = (56100\ [\text{mg} / \text{mol}]) / (\text{OHZ}_{A1}\ [\text{mg KOH/g}]) \qquad (II)$$

$OHZ_{A1}$ = ((Masse der in Schritt i-a) eingesetzten H-funktionellen Starterverbindung (B) x (OHZ der in Schritt i-a) eingesetzten H-funktionellen Starterverbindung (B)) / (Masse der in Schritt i-a) eingesetzten H-funktionellen Starterverbindung (B) + Masse des in Schritt i-a) eingesetzten Alkylenoxids C).

In einer Ausführungsform des erfindungsgemäßen Verfahrens oder der Erfindung weist das das in der Mischung enthaltene Polyetherpolyol eine Äquivalentmasse von 93 bis 225 g/ mol, bevorzugt von 93 bis 190 g/ mol auf.

Als Starter werden in Schritt i-a) H-funktionelle Starterverbindungen (B) eingesetzt. Bei solchen Startern handelt es sich um Verbindungen, die mindestens ein Zerewitinoff-aktives Wasserstoffatom, manchmal auch nur als "aktiver Wasserstoff' bezeichnet, enthalten. Ein an N, O, oder S gebundener Wasserstoff wird als Zerewitinoff-aktiver Wasserstoff bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten. In der vorliegenden Erfindung sind auch die Wasserstoffatome der Hydroxylgruppen der Sauerstoffsäuren des Phosphors als Zerewitinoff-aktive Wasserstoffatome anzusehen. Geeignete H-funktionelle Starterverbindungen weisen meist Funktionalitäten von 1 bis 35, bevorzugt von 1 bis 8 auf. Ihre Äquivalentmolmassen liegen üblicherweise unter 70 g/mol. Neben den bevorzugt zu verwendenden hydroxyfunktionellen Startern können auch aminofunktionelle Starter eingesetzt werden. Beispiele für hydroxyfunktionelle Starterverbindungen sind Methanol, Ethanol, 1-Propanol, 2-Propanol, die Isomere des Butanols, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, Glycerin, Trimethylolpropan, Pentaerythrit, Sorbit, Saccharose, Hydrochinon, Brenzcatechin, Resorcin, 1,3,5-Trihydroxybenzol, sowie methylolgruppenhaltige Kondensate aus Formaldehyd und Phenol oder Harnstoff. Es können auch hochfunktionelle Starterverbindungen auf Basis hydrierter Stärkehydrolyseprodukte eingesetzt werden. Solche sind beispielsweise in EP-A 1525244 beschrieben. Beispiele für aminogruppenhaltige H-funktionelle Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte, ferner methylolgruppenhaltige Kondensate aus Formaldehyd und Melamin sowie Mannichbasen. Außerdem können als Starterverbindungen auch Ringöffnungsprodukte aus cyclischen Carbonsäureanhydriden und Polyolen, die sich nach Zusammengeben der beiden Komponenten sehr rasch in situ bilden, eingesetzt werden. Beispiele sind Ringöffnungsprodukte aus Phthalsäureanhydrid, Bernsteinsäureanhydrid, Maleinsäureanhydrid einerseits und Ethylenglykol, Diethylenglykol, 1,2-Butandiol, 1,3-Butandiol, 1,4-Butandiol, Glycerin, Trimethylolpropan, Pentaerythrit oder Sorbit andererseits. Daneben ist es auch möglich, ein- oder mehrfunktionelle Carbonsäuren direkt als Starterverbindungen einzusetzen.

Ferner können zur Durchführung von Schritt i-a) neben den erwähnten H-funktionellen Starterverbindungen (B) auch vorgefertigte Alkylenoxidadditionsprodukte dieser Starterverbindungen, also Polyoxyalkylenpolyole vorzugsweise mit OH-Zahlen von > 600 bis 1100 mg KOH/g, bevorzugt 700 bis 1000 mg KOH/g, mitverwendet werden. Auch ist es möglich, im erfindungsgemäßen Prozess Polyesterpolyole vorzugsweise mit OH-Zahlen im Bereich von > 600 bis beispielsweise 800 mg KOH/g als (Co-)Starter mit dem Ziel der Polyetheresterherstellung einzusetzen. Hierfür geeignete Polyesterpolyole können beispielsweise aus organischen Dicarbonsäuren und mehrwertigen Alkoholen, vorzugsweise Diolen, nach bekannten Verfahren hergestellt werden.

Des Weiteren können als H-funktionelle Starterverbindungen (B) Polycarbonatpolyole, Polyestercarbonatpolyole oder Polyethercarbonatpolyole, bevorzugt Polycarbonatdiole, Polyestercarbonatdiole oder Polyethercarbonatdiole vorzugsweise jeweils mit OH-Zahlen im Bereich von > 600 bis beispielsweise 800 mg KOH/g, als (Co-)Starter verwendet werden. Diese werden beispielsweise durch Umsetzung von Phosgen, Dimethylcarbonat, Diethylcarbonat oder Diphenylcarbonat mit di- oder höherfunktionellen Alkoholen oder Polyesterpolyolen oder Polyetherpolyolen hergestellt.

Zur Berechnung der $OHZ_{A1}$ gemäß Formel (II) wird bei thiolgruppenhaltigen Starterverbindungen die Zahl der -SH-Gruppen, bei iminogruppenhaltigen Starterverbindungen die Zahl der =NH-Gruppen, bei carboxylgruppenhaltigen Starterverbindungen die Zahl der -COOH-Gruppen und bei aminogruppenhaltigen Starterverbindungen die Zahl der an Aminstickstoffatome gebundenen Wasserstoffatome herangezogen.

Im erfindungsgemäßen Verfahren dienen bevorzugt aminogruppenfreie H-funktionelle Starterverbindungen mit Hydroxygruppen als Träger der aktiven Wasserstoffe wie beispielsweise Methanol, Ethanol, 1-Propanol, 2-Propanol, die Isomere des Butanols, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, Glycerin, Trimethylolpropan, Pentaerythrit, Sorbit, Saccharose, Hydrochinon, Brenzcatechin, Resorcin, 1,3,5-Trihydroxybenzol, methylolgruppenhaltige Kondensate aus Formaldehyd und Phenol und hydrierte Stärkehydrolyseprodukte. Es können auch Gemische verschiedener H-funktioneller Starterverbindungen eingesetzt werden.

In einer Ausführungsform des erfindungsgemäßen Verfahrens ist das Alkylenoxid (C) eine oder mehrere Verbindungen und wird ausgewählt wird aus der Gruppe bestehend aus 1,2-Epoxybutan, Propylenoxid und Ethylenoxid, bevorzugt Propylenoxid und Ethylenoxid. Werden in Schritt i.-a) Gemische aus Ethylenoxid und Propylenoxid eingesetzt, weisen diese bevorzugt bis zu 50 Massen-% Ethylenoxid und besonders bevorzugt bis zu 30 Massen-% Ethylenoxid bezogen auf die Gesamtmasse des Gemisches aus Ethylenoxid und Propylenoxid auf. Ganz besonders bevorzugt wird ausschließlich Propylenoxid eingesetzt. Die Alkylenoxide (C) können dem Reaktor als Einzelkomponenten oder als Gemisch zugeführt werden. Es ist ebenfalls möglich mehrere Alkylenoxide (C) dem Reaktor nacheinander zuzuführen, womit sich Polyoxyalkylenketten mit Blockstruktur realisieren lassen. Bei der Dosierung mehrerer Alkylenoxide ist es möglich die Zusammensetzung des zugeführten Alkylenoxidstroms kontinuierlich oder instantan zu ändern.

In einer Ausführungsform des erfindungsgemäßen Verfahrens besteht die Komponente (D) aus der Brønsted-Säure.

In einer Ausführungsform des erfindungsgemäßen Verfahrens ist die Brønsted-Säure eine anorganische Mineralsäure. Im erfindungsgemäßen Verfahrens erfolgt die Umsetzung in Abwesenheit einer Supersäure wie beispiels-weise Trifluormethansulfonsäure ($CF_3SO_3H$). Entsprechend der allgemein fachlichen Definition weisen Supersäuren einen pKs-Wert von kleiner als minus drei Komma null (-3,0) auf.

In einer Ausführungsform des erfindungsgemäßen Verfahrens ist die Brønsted-Säure Schwefelsäure und/oder eine Sauerstoffsäure des Phosphors, bevorzugt eine Sauerstoffsäure des Phosphors. Als Beispiele für Sauerstoffsäuren des Phosphor seien die Orthophosphorsäure (Phosphorsäure), die Phosphonsäure oder die Phosphinsäure genannt. Weiterhin können auch kondensierte Phosphoroxosäuren, wie die Diphosphorsäure oder die Diphosphonsäure wie auch cyclische Metaphosphor¬säuren verwendet werden. Eine Übersicht über geeignete Phosphoroxosäuren ist beispiels¬weise in Holleman-Wiberg, Lehrbuch der Anorganischen Chemie, 91. - 100. verbesserte und stark erweiterte Aufl., Walter de Gruyter, Berlin, New York 1985, 646 - 664 gegeben.

In einer Ausführungsform des erfindungsgemäßen Verfahrens weist die Sauerstoffsäure des Phosphors eine Struktur gemäß Formel (III) auf:

$$(HO)_a(H)_bP(O)OH \qquad (III)$$

mit a = 0, 1 oder 2 und b = 0, 1 oder 2, wobei gilt a + b = 2.

In einer bevorzugten Ausführungsform des erfindungsgemäßen Verfahrens ist die Sauerstoffsäure des Phosphors Phosphinsäure (mit a=0, b=2), Phosphonsäure (mit a=1, b=1) und/oder Phosphorsäure (ortho-Phosphorsäure, mit a=2, b=0), besonders bevorzugt Phosphorsäure (ortho-Phosphorsäure). Erfindungsgemäß beträgt die in Schritt i.-a) zuzugegebende, berechnete Menge an Brønsted-Säure von 0,5 Gew.-% - 5,0 Gew.-%, bevorzugt von 1,0 Gew.-% bis 4,5 Gew.-% und besonders bevorzugt von 1,5 Gew.-% bis 4,0 Gew.-% bezogen auf die Gesamtmasse der Zwischenstufe (E).

In einer Ausführungsform des erfindungsgemäßen Verfahrens wird die Menge des in Schritt i.-b) zugegebene Menge des Amins (F) so bemessen wird, dass pro Restsäureäquivalent in Zwischenstufe (E) in Schritt i.-b) ) ≥ 0,5 bis ≤ 2,2, bevorzugt ≥ 0,8 bis ≤ 2,0, Aminstickstoffäquivalente zugesetzt werden. Hierbei wird das Restsäureäquivalent mithilfe der Methode ASTM D 7253 (2016) bestimmt. In einer Ausführungsform des erfindungsgemäßen Verfahrens ist das das Amin (F) ein tertiäres Amin, bevorzugt ein hydroxygruppenhaltiges tertiäres Amin.

In einer Ausführungsform des erfindungsgemäßen Verfahrens weist das tertiäre Amin, bevorzugt das hydroxygruppenhaltiges tertiäres Amin eine Hydroxylzahl von 300 mg KOH/g bis 1200 mg, bevorzugt von 350 mg KOH/g bis 1000 mg KOH/g, besonders bevorzugt von 400 mg KOH/g bis 800 mg auf, wobei die Hydroxylzahl mittels der Methode DIN 53240 -2 (2007) bestimmt wurde.

In einer Ausführungsform des erfindungsgemäßen Verfahrens ist das tertiäre Amin ein hydroxygruppenhaltiges tertiäres Amin und das hydroxygruppenhaltige tertiäre Amin ist erhältlich, bevorzugt wird erhalten durch Umsetzung von Ammoniak, einem primären Amin wie beispielsweise Methylamin, Ethylamin, Propylamin, Isopropylamin, Butylamin, sec-Butylamin, N,N-dimethylaminopropylamin einem primären Diamin wie beispielsweise Ethylendiamin,. 1,3-Diaminpopropan, Hexamethylendiamin, Toluylendiamin, einem sekundären Amin wie beispielsweise Dimethylamin, Dibutylamin, Diisopropylamin, Diethanolamin, M-Methylethanolamin und/oder einem sekundären Diamin wie beispielsweise N,N'-dimethylaminopropylamin mit einem Alkylenoxid (I).

In einer weiteren Ausführungsform des erfindungsgemäßen Verfahrens ist das tertiäre hydroxygruppenhaltige Amin auch erhältlich, bevorzugt wird auch erhalten durch Kettenverlängerung von tertiären Alkoholaminen wie Triisopropanolamin, und/oder Triethanolamin, mit Alkylenoxid (I) wie Propylenoxid und/oder Ethylenoxid.

In einer Ausführungsform des erfindungsgemäßen Verfahrens ist das Alkylenoxid (G) eine oder mehrere Verbindungen und wird ausgewählt aus der Gruppe bestehend aus 1,2-Epoxybutan, Propylenoxid und Ethylenoxid. Werden in Schritt ii.) Gemische aus Ethylenoxid und Propylenoxid eingesetzt, weisen diese bevorzugt bis zu 50 Massen-% Ethylenoxid und besonders bevorzugt bis zu 30 Massen-% Ethylenoxid bezogen auf die Gesamtmasse des Gemisches aus Ethylenoxid und Propylenoxid auf. Ganz besonders bevorzugt wird ausschließlich Propylenoxid eingesetzt. Die Alkylenoxide (G) können dem Reaktor als Einzelkomponenten oder als Gemisch zugeführt werden. Es ist ebenfalls möglich mehrere Alkylenoxide (G) dem Reaktor nacheinander zuzuführen, womit sich Polyoxyalkylenketten mit Blockstruktur realisieren lassen. Bei der Dosierung mehrerer Alkylenoxide ist es möglich die Zusammensetzung des zugeführten Alkylenoxidstroms kontinuierlich oder instantan zu ändern.

Weitere nach dem erfindungsgemäßen Verfahren mit Alkylenoxiden (G) unter DMC-Katalyse in Schritt ii) copolymerisierbare Monomere sind beispielsweise aliphatische Lactone, aromatische Lactone, Lactide, cyclische Carbonate mit bevorzugt mindestens drei gegebenenfalls substituierten Methylengruppen zwischen den Sauerstoffatomen der Carbonatgruppe, aliphatische cyclische Anhydride, aromatische cyclische Anhydride und Kohlendioxid.

Aliphatische oder aromatische Lactone sind cyclische Verbindungen enthaltend eine Esterbindung im Ring. Bevorzugte Verbindungen sind 4-gliedrige Ringlactone wie β-Propiolacton, β-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5S,7S)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxan-2,5-dion, 3,6-Di(but-3-en-1-yl)-1,4-dioxan-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiol¬carbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens nicht oder nur zu einem geringen Anteil in die Polymerkette eingebaut.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydro-furan-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Ihre Verwendung wird weiterhin beschrieben in US-A 3538043, US-A 4500704, US-A 5032671, US-A 6646100, EP-A 222453 und WO-A 2008/013731.

In einer Ausführungsform des erfindungsgemäßen Verfahrens wird der DMC-Katalysator (H) in Mengen von 30 bis 150 ppm, bezogen auf die Menge an Komponente (A) und Alkylenoxid (G), eingesetzt.

Für das erfindungsgemäße Verfahren geeignete DMC-Katalysatoren (H) sind im Prinzip aus dem Stand der Technik bekannt (siehe z.B. US-A 3 404 109, US-A 3829505, US-A 3941849 und US-A 5158922). DMC-Katalysatoren, die z.B. in US-A 5470813, EP-A 700949, EP-A 743093, EP-A 761708, WO 97/40086, WO 98/16310 und WO 00/47649 beschrieben sind, besitzen eine sehr hohe Aktivität in der Polymerisation von Alkylenoxiden und ermöglichen die Herstellung von Polyoxyalkylenpolyolen unter optimalen Bedingungen bei sehr geringen Katalysatorkonzentrationen (100 ppm oder weniger), so dass eine Abtrennung des Katalysators aus dem fertigen Produkt im Allgemeinen nicht mehr erforderlich ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch eine Polyoxyalkylenverbindung mit einem zahlenmittleren Molekulargewicht > als 500 g/mol enthalten. Es ist auch möglich, die in EP Anmeldenummer 10163170.3 offenbarten alkalischen DMC-Katalysatoren einzusetzen.

Zur Herstellung der Doppelmetallcyanid-Verbindung geeignete cyanidfreie Metallsalze besitzen bevorzugt die allgemeine Formel (IV),

$$M(X)_n \qquad \text{(IV)}$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist, oder geeignete cyanidfreie Metallsalze besitzen die allgemeine Formel (V),

$$M_r(X)_3 \qquad \text{(V)}$$

wobei
M ausgewählt ist aus den Metallkationen $Fe^{3+}$, $Al^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalate ist und

r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (VI),

$$M(X)_s \qquad (VI)$$

wobei

M ausgewählt ist aus den Metallkationen $Mo^{4+}$, $V^{4+}$ und $W^{4+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (VII),

$$M(X)_t \qquad (VII)$$

wobei

M ausgewählt ist aus den Metallkationen $Mo^{6+}$ und $W^{6+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VIII)

$$(Y)_a M'(CN)_b (A)_c \qquad (VIII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),

A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren (H) enthalten sind, sind Verbindungen der allgemeinen Formel (VIII)

$$M_x[M'_{x'}(CN)_y]_z \qquad (IX),$$

worin M wie in Formel (IV) bis (VII) und

M' wie in Formel (VIII) definiert ist, und

x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5158922 (Spalte 8, Zeilen 29 - 66) zu entnehmen. Besonders bevorzugt verwendet wird Zinkhexacyanocobaltat(III).

Die bei der Herstellung der DMC-Katalysatoren (H) zugesetzten organischen Komplexliganden sind beispielsweise in US-A 5158922 (siehe insbesondere Spalte 6, Zeilen 9 bis 65), US-A 3404109, US-A 3829505, US-A 3941849, EP-A 700949, EP-A 761708, JP-A 4145123, US-A 5470813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol. Optional werden bei der Herstellung der erfindungsgemäßen DMC-Katalysatoren (H) eine oder mehrere komplexbildende Komponente(n) aus den Verbindungsklassen der Polyoxyalkylenverbindungen, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren (H) im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des DMC-Katalysators (H) wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Massen-%, bezogen auf die Gesamtlösung.

Optional wird im dritten Schritt der wässrigen Waschlösung eine oder mehrere weitere komplexbildende Komponente(n), bevorzugt im Bereich zwischen 0,5 und 5 Massen-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei absoluten Drücken von im allgemeinen 0,1 mbar bis Normaldruck (1013 mbar) getrocknet.

Ein bevorzugtes Verfahren zur Isolierung der erfindungsgemäßen DMC-Katalysatoren (H) aus der Suspension durch Filtration, Filterkuchenwäsche und Trocknung wird in WO-A 01/80994 beschrieben.

In einer Ausführungsform des erfindungsgemäßen Verfahrens ist das zur Herstellung des hydroxygruppenhaltigen tertiären Amins (F) einsetzbare Alkylenoxid (I) eine oder mehrere Verbindungen und wird ausgewählt aus der Gruppe bestehend aus 1,2-Epoxybutan, Propylenoxid und Ethylenoxid, bevorzugt Ethylenoxid und Propylenoxid und besonders bevorzugt Propylenoxid. In einer Ausführungsform des erfindungsgemäßen Verfahrens erfolgt die Umsetzung in Schritt i.-a) in Abwesenheit einer Supersäure wie beispielsweise Trifluormethansulfonsäure ($CF_3SO_3H$). Entsprechend der allgemein fachlichen Definition weisen Supersäuren einen pKs-Wert von weniger als minus drei Komma null (-3,0) auf. In einer bevorzugten Ausführungsform des erfindungsgemäßen Verfahrens erfolgt die Umsetzung in Schritt i.-a) in Abwesenheit von Trifluormethansulfonsäure.

In einer Ausführungsform des erfindungsgemäßen Verfahrens wird Schritt i.-a) bei einer Reaktionstemperatur von kleiner 80 °C, bevorzugt von 30°C bis 70°C und besonders bevorzugt von 35°C bis 65°C durchgeführt. Wird Schritt i.-a) bei Temperaturen von 80 °C oder höher durchgeführt, so werden Nebenreaktionen beobachtet, die zu einem erhöhten Gehalt an flüchtigen Nebenprodukten in Zwischenstufe (E) führen. Die Reaktionstemperatur kann während der Alkylenoxiddosierphase in Schritt i.-a) natürlich innerhalb der beschriebenen Grenzen variiert werden

In einer Ausführungsform des erfindungsgemäßen Verfahrens wird in Schritt i.-a) die Gesamtmenge der Komponente (D) enthaltend die Brønsted-Säure mit der H-funktionellen Starterverbindung (B) vor der Zugabe des Alkylenoxids (C) im Reaktor vorvermischt.

In einer weiteren Ausführungsform des erfindungsgemäßen Verfahrens wird in Schritt i.-a) eine erste Teilmenge der Komponente (D) enthaltend die Brønsted-Säure mit der H-funktionellen Starterverbindung (B) vor der Zugabe des Alkylenoxids (C) im Reaktor vorvermischt und mindestens eine zweite Teilmenge, bevorzugt jedoch die gesamte noch fehlende Menge der Komponente (D) enthaltend die Brønsted-Säure zeitgleich mit der Zugabe des Alkylenoxids (C) separat in den ersten Reaktor zugegeben.

In Varianten dieser Ausführungsform des erfindungsgemäßen Verfahrens enden in Schritt i.-a) die Zugaben des Alkylenoxids (C) und der Komponente (D), enthaltend die Brønsted-Säure, entweder zeitgleich oder die Zugabe des Alkylenoxids (C) endet zeitlich vor oder nach der vollständigen Zugabe der Komponente (D), enthaltend die Brønsted-Säure.

Die im Reaktor gemeinsam mit (einem Anteil) der Brønsted-Säure, bevorzugt der Sauerstoffsäure des Phosphors vorgelegte H-funktionelle Starterverbindung (B) wird in Schritt i.-a) unter Inertgasatmosphäre bei Temperaturen von kleiner 80 °C, bevorzugt von 30°C bis 70°C und besonders bevorzugt von 35°C bis 65°C mit einem oder mehreren Alkylenoxiden (C) zur Reaktion gebracht, wobei das Alkylenoxid (C) aber auch das Alkylenoxid (G) in Schritt ii.) in der gängigen Weise dem Reaktor kontinuierlich derart zugeführt werden, dass die sicherheitstechnischen Druckgrenzen des verwendeten Reaktorsystems nicht überschritten werden. Insbesondere ist bei der Dosierung von ethylenoxidhaltigen Alkylenoxidgemischen oder reinem Ethylenoxid darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden..

Die Alkylenoxide (C) bzw. (G) in Schritt i.-a) bzw. Schritt ii.) können dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei Dosierung in die Flüssigphase sollten die Dosieraggregate selbstleerend ausgelegt sein, beispielsweise durch Anbringen der Dosierbohrungen an der Unterseite des Verteilerrings. Vorteilhafterweise kann durch apparative Maßnahmen, beispielsweise durch die Montage von Rückschlagklappen, ein Rückströmen von Reaktionsmedium in die alkylenoxidführenden Leitungen und Dosieraggregate bzw. in die die Alkylenoxid-Vorratsbehälter verhindert werden. Wird ein Alkylenoxidgemisch in Schritt i.-a) und/oder Schritt ii.) dosiert, können die jeweiligen Alkylenoxide (C) bzw. (G) dem Reaktor separat oder als Mischung zugeführt werden. Eine Vorvermischung der Alkylenoxide (C) bzw. (G) kann beispielsweise durch ein in der gemeinsamen Dosierstrecke befindliches Mischaggregat erreicht werden ("inlineblending"). Es hat sich auch bewährt, Alkylenoxide (C) bzw. (G) pumpendruckseitig in einen beispielsweise über Wärmetauscher geführten Umpumpkreislauf einzeln oder vorgemischt zu dosieren. Für die gute Durchmischung mit dem Reaktionsmedium ist es dann von Vorteil ein hochscherendes Mischaggregat in den Alkylenoxid-/Reaktionsmediumstrom zu integrieren.

Soll eine Teilmenge der Brønsted-Säure, bevorzugt der Sauerstoffsäure des Phosphors, parallel zum Alkylenoxidstrom des Alkylenoxids (C) dem Reaktor zugeführt werden, so wird empfohlen, den Teilstrom der Brønsted-Säure, bevorzugt der Sauerstoffsäure des Phosphors, nicht außerhalb der eigentlichen Reaktionszone mit dem Alkylenoxidstrom des Alkylenoxids (C) in Kontakt zu bringen, um eine unkontrollierte und vorzeitige Umsetzung des Alkylenoxids (C) zu vermeiden.

Die Temperatur der exothermen Polymerisation (Alkylenoxidadditionsreaktion) in den Schritten i.-a) und ii) wird durch Kühlung auf dem gewünschten Niveau gehalten bzw. auf das gewünschte Niveau eingestellt. Gemäß dem Stand der Technik zur Auslegung von Polymerisationsreaktoren für exotherme Reaktionen (z.B. Ullmann's Encyclopedia of Industrial Chemistry, Vol. B4, pp 167ff, 5th Ed., 1992) erfolgt eine solche Kühlung im Allgemeinen über die Reaktorwand (z.B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten- Rohrbündel- oder Mischerwärmetauschern. Diese sollten so ausgelegt sein, dass auch zu Beginn der Dosierphase, d. h. bei kleinem Füllstand und / oder bei ggf. hoher Viskosität des reagierenden Reaktorinhalts, effektiv gekühlt werden kann.

Generell sollte in allen Reaktionsphasen durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene Mischenergie, die im Allgemeinen im Bereich von 0,2 bis 5 W/l liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Beispielsweise kann es vorteilhaft sein, feststoffhaltige Dispersionen, die zu Reaktionsbeginn beispielsweise bei der Verwendung von Saccharose vorliegen können, besonders intensiv zu durchmischen. Außerdem sollte insbesondere beim Einsatz fester H-funktioneller Starterverbindungen durch die Wahl des Rühraggregates sichergestellt werden, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosier- und Nachreaktionsphase beobachtet werden, wenn Restalkylenoxide zusätzlich im Vakuum bei absoluten Drücken im Bereich von 1 bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle). Alternativ ist es auch möglich, die notwendige Durchmischung ausschließlich über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1:1 bis 10:1 besitzen. Als Reaktorböden kommen beispielsweise Kugel-, Klöpper-, Flach,- oder Konusböden in Frage.

Nach Ende der Alkylenoxiddosierphase oder einem Wechsel der Zusammensetzung des dosierten Alkylenoxidgemisches in Schritt i.-a) und/oder Schritt ii.) kann sich eine Nachreaktionsphase anschließen, in der restliches Alkylenoxid (C) und/oder Alkylenoxid (G) abreagiert. Das Ende solcher Nachreaktionsphasen ist erreicht, wenn kein weiterer Druckabfall im Reaktionskessel feststellbar ist oder die Druckabfallrate einen bestimmten Schwellenwert unterschreitet, der Druck also beispielsweise um weniger als 20 mbar / h abnimmt. Spuren unreagierter Alkylenoxide (Epoxide) können nach der Reaktionsphase, sofern erforderlich, im Vakuum bei einem absoluten Druck von 1 bis 500 mbar entfernt werden.

Erfindungsgemäß erfolgt in Schritt i.-b) die Zugabe des Amins (F) zu der unter i-a) erhaltenen Zwischenstufe (E) unter Bildung der Komponente (A).

Hierbei wird dem in Schritt i.-a) erhaltenen Polyoxyalkylenpolyol A1) entweder direkt im Reaktionskessel, in dem Schritt i-a) durchgeführt wurde, oder in einem anderen Mischbehälter das Amin (F) zugesetzt.

In einer bevorzugten Ausführungsform des erfindungsgemäßen Verfahrens wird Schritt i.-b) in dem ersten Reaktor durchgeführt, in dem auch die Umsetzung einer H-funktionellen Starterverbindung (B) mit einem Alkylenoxid (C) unter Verwendung einer Komponente (D) erfolgt.

Bezüglich der Menge an in Schritt i.-b) zuzusetzendem Amin orientiert man sich an der nach Schritt i-a) am Zwischenprodukt ermittelten restlichen Säurezahl.

Bevorzugterweise wird die in Schritt i.-b) zugegebene Menge des Amins (F) so bemessen, dass pro Restsäureäquivalent in Zwischenstufe (E) in Schritt i.-b) ) ≥ 0,5 bis ≤ 2,2, bevorzugt ≥ 0,8 bis ≤ 2,0 Aminstickstoffäquivalente zugesetzt werden, wobei das Säurerestäquivalent mithilfe der Methode ASTM D 7253 (2016) bestimmt wird.

Wird beispielsweise ein auf Ethylendiamin gestartetes Alkylenoxidadditionsprodukt als Amin (F) eingesetzt, so kann 1 mol dieses Alkylenoxidadditionsproduktes pro restlichem Säureäquivalent eingesetzt werden. Die Vermischung des Amins (F) mit der aus Schritt i.-a) erhaltenen Zwischenstufe (E) kann bei Raumtemperatur oder erhöhter Temperatur erfolgen. Bevorzugt wird auch Schritt i.-b) unter Schutzgasatmosphäre durchgeführt.

Der gemäß Schritt i.-b) erhaltenen Komponente (A) können bei Bedarf ebenfalls Alterungsschutzmittel bzw. Antioxidantien zugesetzt werden, beispielsweise, wenn diese Komponente (A) vor ihrer weiteren Umsetzung zwischengelagert werden soll und nach Schritt i-a) noch kein oder keine ausreichende Menge eines Antioxidanz zugesetzt wurde.

Erfindungsgemäß erfolgt in Schritt ii.) die Umsetzung der in Schritt i.) erhaltenden Komponente (A) mit dem Alkylenoxid (G) in Anwesenheit des DMC-Katalysators (H) zum Polyoxyalkylenpolyol.

Bevorzugt werden hierbei Polyoxyalkylenpolyole mit einer Hydroxylzahl (OH-Zahl) von > 250 mg KOH / g bis 600 mg KOH / g und besonders bevorzugt von > 300 mg KOH / g bis 600 mg KOH / g erhalten. Der Komponente (A) können vor der Zugabe des DMC-Katalysators (H) außerdem zusätzlich geringe Mengen (1 bis 500 ppm) anderer organischer oder anorganischer Säuren zugesetzt werden, wie beispielsweise in WO 99/14258 beschrieben, wobei diese Säurezugabe im vorliegenden erfindungsgemäßen Verfahren weniger bevorzugt ist. Die Umsetzung der Komponente (A) in Schritt ii.) mit dem Alkylenoxid (C) in Anwesenheit des DMC-Katalysators (H) kann prinzipiell im gleichen Reaktor (erster Reaktor) wie die Herstellung der Komponente (A) in Schritt i.-a) erfolgen. Es ist jedoch bevorzugt, dass Schritt i.-a) sowie optional Schritt i.-b), bevorzugt Schritt i.-a) und Schritt i.-b) in einem ersten Reaktor und Schritt ii) in einem zweiten Reaktor durchgeführt werden, wobei der erste Reaktor verschieden vom zweiten Reaktor ist. Die auf die Menge an Polyoxyalkylenpolyol berechnete DMC-Katalysatorkonzentration liegt im Bereich von 20 bis 1000 ppm, bevorzugt im Bereich von 30 bis 400 ppm, besonders bevorzugt im Bereich von 30 bis 200 ppm und ganz besonders bevorzugt im Bereich von 40 bis 150 ppm.

Der DMC-katalysierte Reaktionsschritt ii.) kann generell nach denselben verfahrenstechnischen Prinzipien durchgeführt werden wie die Herstellung der Vorstufe von Komponente (A) in Schritt i-1). Auf einige verfahrenstechnische Besonderheiten des DMC-katalysierten Reaktionsschrittes ii.) soll im Folgenden eingegangen werden.

In einer bevorzugten Verfahrensweise wird der Reaktorinhalt vor Schritt ii.) in Gegenwart des DMC-Katalysators zunächst bei Temperaturen von 60 bis 150 °C, besonders bevorzugt bei Temperaturen von 90 bis 140 °C, ganz besonders bevorzugt bei Temperaturen von 100 bis 130 °C mit Inertgas (Stickstoff oder ein Edelgas wie beispielsweise Argon) über einen Zeitraum von bevorzugt 10 bis 60 min unter Rühren gestrippt. Hierbei werden flüchtige Bestandteile unter Einleiten von Inertgasen in die Flüssigphase bei gleichzeitig angelegtem Vakuum, bei einem absoluten Druck von 5 bis 500 mbar, entfernt. Die Temperatur kann anschließend auf die Reaktionstemperatur des nachfolgenden Schritts, beispielsweise des Aktivierungs- und / oder Alkylenoxidadditionsschritts in Schritt ii.) eingestellt werden, sofern diese nicht identisch mit der Stripptemperatur ist. Die endgültige Reaktionstemperatur in Schritt ii.) kann aber auch erst in der Anfangsphase der Alkylenoxiddosierung, beispielsweise unter Nutzung der freiwerdenden Reaktionswärme, eingestellt werden. In einem der eigentlichen Polymerisationsphase (Alkylenoxidadditionsphase) durch Zugabe des Alkylenoxids (G) in Schritt ii.) vorgelagerten Verfahrensschritt kann der DMC-Katalysator (H) durch Zugabe von typischerweise 2 bis 20 Massen-% des Alkylenoxids (G), bezogen auf die Menge der in Schritt ii) eingesetzten Komponente A), zunächst separat aktiviert werden. Die Zugabe des mindestens einen Alkylenoxids (G) kann vor, während oder nach dem Aufheizen des Reaktorinhaltes auf die Stripp- bzw. Reaktionstemperatur geschehen; sie erfolgt bevorzugt nach dem Strippen. Nach Unterbrechung der Alkylenoxiddosierung des Alkylenoxids (G), nachdem typischerweise 2 bis 20 Massen-% des mindestens einen Alkylenoxids (G), bezogen auf die in Schritt ii) eingesetzte Komponente A) zugegeben worden sind, macht sich die Aktivierung des DMC-Katalysators (H) in manchen Fällen durch einen beschleunigten Abfall des Reaktordruckes bemerkbar, wodurch der beginnende Alkylenoxidumsatz angezeigt wird. Dem Reaktionsgemisch wird sodann, d. h. nach erfolgter Aktivierung, die verbliebene Teilmenge der insgesamt zur Herstellung des angestrebten Polyoxyalkylenpolyols (1) zuzuführenden Menge des mindestens einen Alkylenoxids (G) zugeführt. Im erfindungsgemäßen Verfahren erfolgt die Katalysatoraktivierung in vielen Fällen jedoch allmählich, so dass die Unterbrechung der Alkylenoxiddosierung entfallen und direkt mit der kontinuierlichen Dosierung des Alkylenoxides (G) begonnen werden kann.

Die in Schritt ii) zu wählende Reaktionstemperatur kann während der Alkylenoxiddosierphase variiert werden. Unter der Reaktionstemperatur ist das zeitliche Mittel der in der reagierenden Flüssigkeit herrschenden Temperatur während der Alkylenoxiddosierphase zu verstehen. Es kann sich als vorteilhaft herausstellen, die Reaktionstemperatur in Schritt ii.) zu variieren, beispielsweise sie gegen Ende der Alkylenoxiddosierphase anzuheben, um eine Beschleunigung des Alkylenoxidumsatzes in der letzten Phase der Alkylenoxiddosierung und in der Nachreaktionsphase zu erzielen. Üblicherweise bleibt die Reaktionstemperatur während der Alkylenoxiddosierphase des Schrittes ii) konstant. In Schritt ii) werden Reaktionstemperaturen bevorzugt im Bereich von 80 bis 200 °C, besonders bevorzugt aber von 100 bis 160 °C und besonders bevorzugt von 135 °C bis 145 °C gewählt. Bei Einhaltung des Reaktionstemperaturbereichs von 135 bis 145 °C resultiert ein verhältnismäßig geringer Druckanstieg während der Dosierung des Alkylenoxids (G) in Schritt ii.). In Schritt ii.) kann das mindestens eine Alkylenoxid (G) dem Reaktor im DMC-katalysierten Reaktionsschritt ebenfalls auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei DMC-katalysierten Prozessen ist die Dosierung in die Flüssigphase die bevorzugte Variante.

Nach Ende der Alkylenoxiddosierung oder vor einem Wechsel des Alkylenoxides in Schritt ii.) können sich Nachreaktionsphasen anschließen, bzw. Nachreaktionsphasen zwischengeschaltet werden, in denen die Abnahme der Konzentration an unreagiertem Alkylenoxid durch Überwachung des Drucks quantifiziert werden kann. Das Ende solcher Nachreaktionsphasen ist erreicht, wenn kein weiterer Druckabfall im Reaktionskessel feststellbar ist oder die Druckabfallrate einen bestimmten Schwellenwert unterschreitet, der Druck also beispielsweise um weniger als 20 mbar / h abnimmt. Gegebenenfalls kann das Reaktionsgemisch nach Ende der letzten Nachreaktionsphase von kleinen Mengen an nicht umgesetzten Alkylenoxiden im Vakuum, beispielsweise bei einem absoluten Druck von 1 bis 500 mbar, oder durch Strippen vollständig befreit werden. Durch Strippen werden flüchtige Bestandteile, wie beispielsweise (Rest-)Alkylenoxide, unter Einleiten von Inertgasen und/oder Wasserdampf in die Flüssigphase bei gleichzeitig angelegtem Vakuum (beispielsweise durch Durchleiten von Inertgas bei einem Absolutdruck von 5 bis 500 mbar) entfernt. Das Entfernen flüchtiger Bestandteile, wie beispielsweise nicht umgesetzter Alkylenoxide, entweder im Vakuum oder durch Strippen, erfolgt im Allgemeinen bei Temperaturen von 20 bis 200 °C, bevorzugt bei 50 bis 160 °C und vorzugsweise bei Reaktionstemperatur unter Rühren. Solche Strippvorgänge können auch in sogenannten Strippkolonnen durchgeführt werden, in denen dem Produktstrom ein Inertgas- oder Wasserdampfstrom entgegengeleitet wird. Bevorzugt werden zu diesem Zweck Strippkolonnen mit Füllkörpern oder Einbauten verwendet. Solche Strippvorgänge können auch kontinuierlich durchgeführt werden, indem beispielsweise das nicht gestrippte Material in einem Pufferbehälter gesammelt und aus diesem kontinuierlich der Strippkolonne zugeführt wird. Nach Erreichen von Druckkonstanz in der Nachreaktionsphase und ggf. nach Entfernen flüchtiger Bestandteile durch Vakuum und/oder Strippen kann das Produkt aus dem Reaktor abgelassen werden.

Den nach dem erfindungsgemäßen Verfahren hergestellten Mischungen enthaltend das Polyoxyalkylenpolyol können gegebenenfalls Alterungsschutzmittel wie z. B. Antioxidantien zugesetzt werden.

Vorzugsweise verbleibt der DMC-Katalysator (H) in der Mischung enthaltend das Polyoxyalkylenpolyol, bevorzugt der Mischung enthaltend das Polyetherpolyol, er kann jedoch auch abgetrennt werden, beispielsweise durch Behandlung mit Adsorbentien. Verfahren zur Abtrennung von DMC-Katalysatoren sind beispielsweise beschrieben in US-A 4987271, DE-A 3132258, EP-A 406440, US-A 5391722, US-A 5099075, US-A 4721818, US-A 4877906 und EP-A 385619.

Nach dem erfindungsgemäßen Verfahren ist es ebenfalls möglich, die Zusammensetzung des Alkylenoxidgemisches nicht nur innerhalb eines der beiden Reaktionsschritte, sondern auch beim Wechsel vom sauer katalysierten (Schritte i-a) und i-b)) zum DMC-katalysierten Alkylenoxidadditionsschritt (Schritt ii)) zu ändern.

Werden während des DMC-katalysierten Alkylenoxidadditionschrittes in Schritt ii.) verschiedene Alkylenoxide (G) verwendet, so können diese wiederum entweder als Mischung oder nacheinander zudosiert werden. Bei letzterer Dosierweise erhalten die unter DMC-Katalyse weiterwachsenden Polyoxyalkylenketten Blockstrukturen. Oft werden als Endblock reines Ethylenoxid oder Mischungen aus Propylenoxid und Ethylenoxid mit einem hohen Ethylenoxidanteil zudosiert, so dass die hergestellten Polyoxyalkylenpolyole 40 bis 100 % primäre OH-Endgruppen aufweisen Bei der Dosierung mehrerer Alkylenoxide ist es möglich die Zusammensetzung des zugeführten Alkylenoxidstroms kontinuierlich oder instantan zu ändern.

In einer bevorzugten Ausführungsform des erfindungsgemäßen Verfahrens wird Schritt i.-a) und Schritt i.-b) in einem ersten Reaktor und Schritt ii) in einem zweiten Reaktor durchgeführt, wobei der erste Reaktor verschieden vom zweiten Reaktor ist. Es hatte sich herausgestellt, dass ein solcher Reaktorwechsel zu einer besseren Aktivierung des in Schritt ii.) eingesetzten DMC-Katalysators führt. Eine solche verbesserte DMC-Katalysatoraktivierung manifestiert sich durch einen weniger starken Druckanstieg bei gleicher Epoxiddosierrate in der Anfangsphase von Schritt ii.).

Ein weiterer Gegenstand der Erfindung ist die Zwischenstufe (E) erhältlich nach dem erfindungsgemäßen Verfahren.

Ein weiterer Gegenstand der Erfindung ist die Komponente (A) erhältlich nach dem erfindungsgemäßen Verfahren.

Ein weiterer Gegenstand der Erfindung ist eine Komponente (A) enthaltend ein Polyoxyalkylenpolyol A1) mit einer berechneten Hydroxylzahl ($OHZ_{A1}$) von 600 bis 1060 mg KOH und eine alkoxylierte Sauerstoffsäure des Phosphors, wobei der berechnete Phosphoranteil von 0,16 bis 2,35 Gew.-% bezogen auf die Komponente (A) beträgt. Hierbei resultiert das Polyoxyalkylenpolyol A1) durch Umsetzung der H-funktionellen Starterverbindung (B) mit dem Alkylenoxid (C) in Schritt i.). Hierbei ist erfindungsgemäß unter der alkoxylierten Sauerstoffsäure des Phosphors das Umsetzungsprodukt der erfindungsgemäßen Sauerstoffsäure des Phosphors mit dem Alkylenoxid (C) in Schritt i.) zu verstehen.

Ein weiterer Gegenstand der Erfindung ist die Mischung erhältlich nach dem erfindungsgemäßen Verfahren.

In einer weiteren Ausführungsform des erfindungsgemäßen Verfahrens ist die Molmasse des Polyoxyalkylenpolyols, welches in Schritt ii.) erhalten wird, mindestens 44 g/mol, bevorzugt, mindestens 58 g/mol und ganz bevorzugt mindestens 88 g/mol höher ist als die Molmasse der Komponente (A), welche in Schritt i.) erhalten wird. In einer Ausführungsform der Erfindung weist das in der Mischung enthaltene Polyoxyalkylenpolyol Äquivalentmassen von 93 bis 225 g/ mol, bevorzugt von 93 bis 190 g/ mol auf.

Ein weiterer Gegenstand der Erfindung ist eine Mischung enthaltend ein Polyoxyalkylenpolyol, bevorzugt ein Polyetherpolyol mit einer Äquivalentmasse von 93 bis 225 g/mol, bevorzugt von 93 bis 190 g/ mol und eine alkoxylierte Sauerstoffsäure des Phosphors, wobei der berechnete Phosphoranteil von 0,065 bis 1,287 Gew.-%, bezogen auf die Mischung, beträgt. Hierbei ist erfindungsgemäß unter der alkoxylierten Sauerstoffsäure des Phosphors in der vorliegenden Mischung das Umsetzungsprodukt der erfindungsgemäßen Sauerstoffsäure des Phosphors mit dem Alkylenoxid (C) in Schritt i.) und mit dem Alkylenoxid (G) in Schritt ii.) zu verstehen.

Die erfindungsgemäße Mischung enthaltend das erfindungsgemäße Polyoxyalkylenpolyol, bevorzugt die erfindungsgemäße Mischung enthaltend das erfindungsgemäße Polyetherpolyol, kann allein oder gegebenenfalls im Gemisch mit weiteren isocyanatreaktiven Komponenten mit organischen Polyisocyanaten, gegebenenfalls in Gegenwart von Treibmitteln, in Gegenwart von Katalysatoren und gegebenenfalls mit weiteren Zusatzstoffen wie z.B. Zellstabilisatoren zur Reaktion gebracht werden und so als Komponente von massiven oder geschäumten Polyurethanen, insbesondere Polyurethan-Weichschaumstoffen wie beispielsweise Polyurethan-Weichblockschaum und Polyurethan-Weichformschaum, dienen.

Polyurethane, bevorzugt massive oder geschäumte Polyurethane, insbesondere Polyurethan-Weichschäume wie beispielsweise Polyurethan-Weichblockschäume und Polyurethan-Weichformschäume, enthaltend die erfindungsgemäße Mischung enthaltend das erfindungsgemäße Polyoxyalkylenpolyol, bevorzugt die erfindungsgemäße Mischung enthaltend das erfindungsgemäße Polyetherpolyol sind ebenfalls Gegenstand der Erfindung.

In einer ersten Ausführungsform umfasst die Erfindung ein Verfahren zur Herstellung einer Mischung enthaltend ein Polyoxyalkylenpolyol, bevorzugt ein Polyetherpolyol, umfassend folgende Schritte:

> i. Bereitstellung einer Komponente (A), enthaltend ein Polyoxyalkylenpolyol A1) mit einer berechneten Hydroxylzahl $(OHZ_{A_1})$ von 600 bis 1060 mg KOH / g durch
>
> > a) Umsetzung einer H-funktionellen Starterverbindung (B) mit einem Alkylenoxid (C) unter Verwendung einer Komponente (D), wobei die Komponente (D) eine Brønsted-Säure enthält, unter Bildung einer Zwischenstufe (E);
> > b) Zugabe eines Amins (F) zu der unter i-a) erhaltenen Zwischenstufe (E) unter Bildung der Komponente (A);
>
> ii. Anschließende Umsetzung der Komponente (A) mit einem Alkylenoxid (G) in Anwesenheit eines DMC-Katalysators (H) zur Mischung enthaltend das Polyoxyalkylenpolyol;
>
> wobei die Umsetzung in Schritt i.-a) in Abwesenheit einer Supersäure erfolgt,
> und wobei die gemäß Schritt i.-a) zuzugebende, berechnete Menge an Bronsted-Säure von 0,5 Gew.- % - 5,0 Gew.-%, bevorzugt von 1,0 Gew.-% bis 4,5 Gew.-% und besonders bevorzugt von 1,5 Gew.- % bis 4,0 Gew.-% bezogen auf die Gesamtmasse der Zwischenstufe (E) beträgt.

In einer zweiten Ausführungsform umfasst die Erfindung ein Verfahren gemäß der ersten Ausführungsform, wobei das in der Mischung enthaltene Polyoxyalkylenpolyol eine Äquivalentmasse von 93 bis 225 g/ mol bevorzugt von 93 bis 190 g/ mol aufweist.

In einer dritten Ausführungsform umfasst die Erfindung ein Verfahren gemäß der ersten oder zweiten Ausführungsform, wobei das Alkylenoxid (C) eine oder mehrere Verbindungen ist und ausgewählt wird aus der Gruppe bestehend aus 1,2-Epoxybutan, Propylenoxid und Ethylenoxid, bevorzugt Propylenoxid und Ethylenoxid.

In einer vierten Ausführungsform umfasst die Erfindung ein Verfahren gemäß einer der ersten bis dritten Ausführungsformen, wobei die Brønsted-Säure eine anorganische Mineralsäure ist.

In einer fünften Ausführungsform umfasst die Erfindung ein Verfahren gemäß der vierten Ausführungsform, wobei die Brønsted-Säure Schwefelsäure und/oder eine Sauerstoffsäure des Phosphors, bevorzugt eine Sauerstoffsäure des Phosphors ist.

In einer sechsten Ausführungsform umfasst die Erfindung ein Verfahren gemäß einer der ersten bis fünften Ausführungsformen, wobei die Brønsted-Säure eine Sauerstoffsäure des Phosphors ist, bevorzugt Phosphinsäure, Phosphonsäure und/oder Phosphorsäure (ortho-Phosphorsäure), und besonders bevorzugt Phosphorsäure (ortho-Phosphorsäure) ist.

In einer siebten Ausführungsform umfasst die Erfindung ein Verfahren gemäß einer der ersten bis sechsten Ausführungsformen, wobei in Schritt i.-b) die zugegebene Menge des Amins (F) so bemessen wird, dass pro Restsäureäquivalent in Zwischenstufe (E) in Schritt i.-b) ≥ 0,5 bis ≤ 2,2, bevorzugt ≥ 0,8 bis ≤ 2,0 Aminstickstoffäquivalente zugesetzt werden, wobei das Säurerestäquivalent mithilfe der in der Beschreibung offenbarten Methode bestimmt wird.

In einer achten Ausführungsform umfasst die Erfindung ein Verfahren gemäß einer der ersten bis siebten Ausführungsformen, wobei das Amin (F) ein tertiäres Amin, bevorzugt ein hydroxygruppenhaltiges tertiäres Amin ist.

In einer neunten Ausführungsform umfasst die Erfindung ein Verfahren gemäß der achten Ausführungsform, wobei das tertiäre Amin eine Hydroxylzahl von 300 mg KOH/g bis 1200 mg, bevorzugt von 350 mg KOH/g bis 1000 mg KOH/g, besonders bevorzugt von 400 mg KOH/g bis 800 mg aufweist, wobei die Hydroxylzahl mittels der in der Beschreibung offenbarten Methode bestimmt wurde.

In einer zehnten Ausführungsform umfasst die Erfindung ein Verfahren gemäß der achten oder neunten Ausführungsform, wobei das tertiäre Amin ein hydroxygruppenhaltiges tertiäres Amin ist und das hydroxygruppenhaltige tertiäre Amin erhältlich ist, bzw. bevorzugt erhalten wird durch Umsetzung von Ammoniak, einem primären Amin, einem primären Diamin, einem sekundären Amin und/oder einem sekundären Diamin mit einem Alkylenoxid (I) und/oder durch Kettenverlängerung von tertiären Alkoholaminen mit einem Alkylenoxid (I).

In einer elften Ausführungsform umfasst die Erfindung ein Verfahren gemäß einer der ersten bis zehnten Ausführungsformen, wobei das Alkylenoxid (G) eine oder mehrere Verbindungen ist und ausgewählt wird aus der Gruppe bestehend aus 1,2-Epoxybutan, Propylenoxid und Ethylenoxid

In einer zwölften Ausführungsform umfasst die Erfindung ein Verfahren gemäß einer der ersten bis elften Ausführungsformen, wobei der DMC-Katalysator (H) in Mengen von 30 bis 150 ppm, bezogen auf die Menge an Komponente (A) und Alkylenoxid (G), eingesetzt wird.

In einer dreizehnten Ausführungsform umfasst die Erfindung ein Verfahren gemäß einer der ersten bis zwölften Ausführungsformen, wobei Schritt i.-a) bei einer Reaktionstemperatur von kleiner 80 °C, bevorzugt von 30°C bis 70°C und besonders bevorzugt von 35°C bis 65°C durchgeführt wird. In einer vierzehnten Ausführungsform umfasst die Erfindung ein Verfahren gemäß einer der ersten bis dreizehnten Ausführungsformen, wobei Schritt i.-a) sowie optional Schritt i.-b), bevorzugt Schritt i.-a) und Schritt i.-b) in einem ersten Reaktor und Schritt ii) in einem zweiten Reaktor durchgeführt wird, wobei der erste Reaktor verschieden vom zweiten Reaktor ist.

In einer fünfzehnten Ausführungsform umfasst die Erfindung ein Verfahren gemäß einer der ersten bis vierzehnten Ausführungsformen, wobei eine erste Teilmenge oder die Gesamtmenge der Komponente (D) enthaltend die Brønsted-Säure mit der H-funktionellen Starterverbindung (B) vor der Zugabe des Alkylenoxids (C) bevorzugt im ersten Reaktor vorvermischt wird.

In einer sechzehnten Ausführungsform umfasst die Erfindung ein Verfahren gemäß einer der ersten bis fünfzehnten Ausführungsformen, wobei mindestens eine zweite Teilmenge der Komponente (D) enthaltend die Brønsted-Säure zeitgleich mit der Zugabe des Alkylenoxids (C) separat in den ersten Reaktor zugegeben wird.

In einer siebzehnten Ausführungsform umfasst die Erfindung ein Verfahren gemäß einer der ersten bis sechzehnten Ausführungsformen, wobei die Zugaben des Alkylenoxids (C) und der Komponente (D), enthaltend die Brønsted-Säure, entweder zeitgleich enden oder die Zugabe des Alkylenoxids (C) zeitlich vor oder nach der vollständigen Zugabe der Komponente (D), enthaltend die Brønsted-Säure, endet.

In einer achtzehnten Ausführungsform umfasst die Erfindung ein Verfahren gemäß einer der ersten bis siebzehnten Ausführungsformen, wobei Schritt ii) bei einer Reaktionstemperatur von 135 °C bis 145 °C durchgeführt wird.

In einer neunzehnten Ausführungsform umfasst die Erfindung eine Zwischenstufe (E) erhältlich nach einem Verfahren gemäß einer der ersten bis achtzehnten Ausführungsformen.

In einer zwanzigsten Ausführungsform umfasst die Erfindung eine Komponente (A) erhältlich nach einem Verfahren gemäß einer der ersten bis achtzehnten Ausführungsformen.

In einer einundzwanzigsten Ausführungsform umfasst die Erfindung eine Mischung erhältlich nach einem Verfahren gemäß einer der ersten bis achtzehnten Ausführungsformen.

In einer zweiundzwanzigsten Ausführungsform umfasst die Erfindung eine Mischung gemäß der einundzwanzigsten Ausführungsform, wobei das in der Mischung enthaltene Polyoxyalkylenpolyol Äquivalentmassen von 93 bis 225 g/ mol, bevorzugt von 93 bis 190 g/ mol aufweist.

In einer dreiundzwanzigsten Ausführungsform umfasst die Erfindung eine Komponente (A) Komponente (A) enthaltend ein Polyoxyalkylenpolyol A1) mit einer berechneten Hydroxylzahl (OHZ$_{A1}$) von 600 bis 1060 mg KOH und eine alkoxylierte Sauerstoffsäure des Phosphors, wobei der berechnete Phosphoranteil von 0,16 bis 2,35 Gew.-% bezogen auf die Komponente (A) beträgt.

In einer vierundzwanzigsten Ausführungsform umfasst die Erfindung eine Mischung enthaltend ein Polyoxyalkylenpolyol, bevorzugt ein Polyetherpolyol mit einer Äquivalentmasse von 93 bis 225 g/mol, bevorzugt von 93 bis 190 g/ mol und eine alkoxylierte Sauerstoffsäure des Phosphors, wobei der berechnete Phosphoranteil von 0,065 bis 1,287 Gew.-%, bezogen auf die Mischung, beträgt.

**Beispiele**

**Allgemeines:**

Drücke sind grundsätzlich als Absolutdrücke zu verstehen. Prozentangaben verstehen sich, sofern nicht anders angegeben, als Gewichtsprozente.

**Methoden:**

OH-Zahl, Säurezahl und Viskosität

Die Bestimmung der OH-Zahlen (OHZ) erfolgte gemäß der Vorschrift der DIN 53240-2 (2007), die der Säurezahlen erfolgten nach ASTM D 7253 (2016). Die Viskositäten wurden mittels Rotationsviskosimeter (Physica MCR 51, Hersteller: Anton Paar) nach der Vorschrift der DIN 53018 ermittelt.

Bestimmung der Reaktionstemperatur $T_R$

Die Reaktionstemperatur $T_R$ wurde mittels eines im Bodenbereich des verwendeten Reaktors befindlichen Thermoelementes bestimmt. Unter Reaktionstemperatur $T_R$ ist die Temperatur der reagierenden Flüssigkeit zu verstehen.

**Eingesetzte Rohstoffe**

Katalysator für die Alkylenoxidaddition (DMC-Katalysator):

Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in WO-A 01/80994, Beispiel 6.

IRGANOX® 1076:

Octadecyl-3-(3,5-di-tert.butyl-4-hydroxyphenyl)propionat. (BASF SE)

Oxophosphorsäure:

Orthophosphorsäure, 85 Gew.-% in Wasser (Fisher Scientific)

Neutralisationsmittel 1 (erfindungsgemäß):

Ein auf Triethanolamin gestarteter Polyether, ausschließlich auf Basis Propylenoxid, mit einer OHZ von 495 mg KOH / g, entsprechend einer Molmasse von 340 g / mol (Covestro)

Neutralisationsmittel 2 (erfindungsgemäß):

Ein auf Ethylendiamin gestarteter Polyether, ausschließlich auf Basis Propylenoxid, mit einer OHZ von 470 mg KOH / g, entsprechend einer Molmasse von 477 g / mol (Covestro)

Neutralisationsmittel 3 (Vergleich):

Kaliumcarbonat (Acros)

**Herstellung von Vorstufen gemäß Schritt i-a)**

**Beispiel A, erfindungsgemäß:**

In einen 10 l Laborautoklaven wurden unter Stickstoffatmosphäre 2764,2 g Trimethylolpropan (TMP) und 255,2 g einer 85 %igen Lösung von Orthophosphorsäure in Wasser gegeben. Sauerstoff wurde während der Aufheizphase auf 100 °C durch 3-maliges Beaufschlagen des Autoklaven mit Stickstoff bis zu einem Absolutdruck von 4 bar und anschließendes Evakuieren auf ca. 40 mbar unter Rühren (Gitterrührer, 100 U / min.) entfernt. Bei 100 °C wurde der Reaktorinhalt unter Rühren mit 100 U/min über einen Zeitraum von 3 h unter Einleitung von 50 ml $N_2$ unter die Flüssigkeitsoberfläche gestrippt. Die Rührerdrehzahl wurde sodann auf 450 U / min erhöht und der Reaktorinhalt auf 60 °C abgekühlt. Unter diesen Bedingungen wurden 3019 g Propylenoxid (PO) innerhalb eines Zeitraums von 5,1 Stunden in den Gasraum des Autoklaven dosiert. Nach einer Nachreaktionszeit von 3,5 h wurde der Reaktorinhalt noch über einen Zeitraum von 30 min. bei 60 °C im Vakuum bei einem Druck von 30 mbar ausgeheizt. Nach Erhöhung auf atmosphärischen Druck wurden dem Reaktorinhalt 2,412 g IRGANOX® 1076 zugefügt.

Die gemessene OHZ des Produktes betrug 616 mg KOH / g und die Viskosität bei 25 °C 2315 mPas. Es wurden 3,62 Gew.-% Orthophosphorsäure, bezogen auf die Ansatzmasse eingesetzt. Der rechnerische Phosphorgehalt in der Vorstufe gemäß Beispiel A betrug 1,142 Gew.-%.

Bei Wiederholungen dieses Ansatzes wurden Vorstufen mit folgenden Kenndaten erhalten:

**Beispiel B, erfindungsgemäß :**

Gemessene OHZ: 623,8 mg KOH / g; Säurezahl: 405 ppm KOH

**Beispiel C, erfindungsgemäß:**

Gemessene OHZ: 624,9 mg KOH / g; Säurezahl: 420 ppm KOH

**Beispiel D, Vergleich:**

In einen 10 l Laborautoklaven wurden unter Stickstoffatmosphäre 2633,2 g TMP und 386,0 g einer 85 %igen Lösung von Orthophosphorsäure in Wasser gegeben. Sauerstoff wurde während der Aufheizphase auf 100 °C durch 3-maliges Beaufschlagen des Autoklaven mit Stickstoff bis zu einem Absolutdruck von 4 bar und anschließendes Evakuieren auf ca. 40 mbar unter Rühren (Gitterrührer, 100 U / min.) entfernt. Bei 100 °C wurde der Reaktorinhalt unter Rühren mit 100 U/min über einen Zeitraum von 3 h unter Einleitung von 50 ml $N_2$ unter die Flüssigkeitsoberfläche gestrippt. Die Rührerdrehzahl wurde sodann auf 450 U / min erhöht und der Reaktorinhalt auf 60 °C abgekühlt. Unter diesen Bedingungen wurden 3039,6 g Propylenoxid innerhalb eines Zeitraums von 5,1 Stunden in den Gasraum des Autoklaven dosiert. Nach einer Nachreaktionszeit von 2,0 h wurde der Reaktorinhalt noch über einen Zeitraum von 30 min. bei 60 °C im Vakuum bei einem Druck von 35 mbar ausgeheizt. Nach Erhöhung auf atmosphärischen Druck wurden dem Reaktorinhalt 2,413 g IRGANOX® 1076 zugefügt.

Die OHZ des Produktes betrug 619 mg KOH / g und seine Säurezahl betrug 5700 ppm KOH. Es wurden 5,46 Gew.-% Orthophosphorsäure, bezogen auf die Ansatzmasse eingesetzt. Der rechnerische Phosphorgehalt in der Vorstufe gemäß Beispiel D betrug 1,727 Gew.-%.

**Herstellung von Endprodukten gemäß den Schritten i-b) und ii**

Die Ergebnisse der Versuche zu den Schritten i-b) und ii sind in Tabelle 1 zusammengefasst.

**Beispiel 1, erfindungsgemäß:**

In einen 2 l Laborautoklaven wurden unter Stickstoffatmosphäre 752,6 g der Vorstufe gemäß Beispiel A und 0,51 g des Neutralisationsmittels 1 gegeben. Das Gemisch wurde über einen Zeitraum von 0,25 h bei Raumtemperatur gerührt (Kreuzbalkenrührer, 200 U/min). Es wurden sodann 0,124 g DMC-Katalysator zugegeben und der Inhalt des Autoklaven wurde 60 min. bei 130 °C unter Rühren mit 200 U/min. im Vakuum bei einem Druck von ca. 130 mbar unter Einleiten von 50 ml Stickstoff pro Minute über einen unter dem Flüssigkeitsspiegel liegenden Verteilerring gestrippt. Danach wurden, ebenfalls bei 130 °C, aber Rühren mit 800 U/min., 447,5 g Propylenoxid über einen Zeitraum von 4,97 h mit konstanter Dosierrate in den Gasraum des Autoklaven eindosiert. Der Start der Propylenoxiddosierung erfolgte bei einem Druck von 0,044 bar. Der maximale Druck von 3,29 bar wurde nach 295 g dosiertem Propylenoxid erreicht. Nach einer Nachreaktionszeit von 7,0 h wurde 0,5 h bei 130 °C bei einem absoluten Druck von 1 mbar ausgeheizt, danach auf 80 °C abgekühlt und 0,630 g IRGANOX® 1076 zugegeben. Die OH-Zahl des Produktes betrug 395 mg KOH/g und die Viskosität bei 25 °C 745 mPas. Der rechnerische Phosphorgehalt im Polyoxyalkylenpolyol gemäß Beispiel 1 betrug 0,716 Gew.-%.

**Beispiel 2, Vergleich:**

In einen 2 l Laborautoklaven wurden unter Stickstoffatmosphäre 750,9 g der Vorstufe gemäß Beispiel B gegeben. Es wurden sodann 0,129 g DMC-Katalysator zugegeben und der Inhalt des Autoklaven wurde 45 min. bei 130 °C unter Rühren mit 200 U/min. (Kreuzbalkenrührer) im Vakuum bei einem Druck von ca. 120 mbar unter Einleiten von 50 ml Stickstoff pro Minute über einen unter dem Flüssigkeitsspiegel liegenden Verteilerring gestrippt. Danach wurden, ebenfalls bei 130 °C, aber Rühren mit 800 U/min., 450,0 g Propylenoxid über einen Zeitraum von 5,0 h mit konstanter Dosierrate in den Gasraum des Autoklaven eindosiert. Der Start der Propylenoxiddosierung erfolgte bei einem Druck von 0,065 bar. Der maximale Druck von 4,47 bar wurde nach 234 g dosiertem Propylenoxid erreicht. Nach einer Nachreaktionszeit von 6,0 h wurde 0,5 h bei 130 °C bei einem absoluten Druck von 1 mbar ausgeheizt, danach auf 80 °C abgekühlt und 0,633 g IRGANOX® 1076 zugegeben. Die OH-Zahl des Produktes betrug 394 mg KOH/g und die Viskosität bei 25 °C 744 mPas. Der rechnerische Phosphorgehalt im Polyoxyalkylenpolyol gemäß Beispiel 2 betrug 0,714 Gew.-%.

**Beispiel 3, erfinderisch:**

In einen 2 l Laborautoklaven wurden unter Stickstoffatmosphäre 750,0 g der Vorstufe gemäß Beispiel B und 1,900 g des Neutralisationsmittels 1 gegeben. Das Gemisch wurde über einen Zeitraum von 0,25 h bei Raumtemperatur gerührt (Kreuzbalkenrührer, 200 U/min). Es wurden sodann 0,123 g DMC-Katalysator zugegeben und der Inhalt des Autoklaven wurde 60 min. bei 130 °C unter Rühren mit 200 U/min. im Vakuum bei einem Druck von ca. 125 mbar unter Einleiten von 50 ml Stickstoff pro Minute über einen unter dem Flüssigkeitsspiegel liegenden Verteilerring gestrippt. Gegen Ende der Strippzeit wurde die Temperatur auf 140 °C erhöht. Danach wurden, ebenfalls bei 140 °C, aber Rühren mit 800 U/min., 447,5 g Propylenoxid über einen Zeitraum von 5,03 h mit konstanter Dosierrate in den Gasraum des Autoklaven eindosiert. Der Start der Propylenoxiddosierung erfolgte bei einem Druck von 0,062 bar. Der maximale Druck von 2,85 bar wurde nach 245 g dosiertem Propylenoxid erreicht. Nach einer Nachreaktionszeit von 5,0 h wurde 0,5 h bei 130 °C bei einem absoluten Druck von 1 mbar ausgeheizt, danach auf 80 °C abgekühlt und 0,602 g IRGANOX® 1076 zugegeben. Die OH-Zahl des Produktes betrug 397 mg KOH/g und die Viskosität bei 25 °C 766 mPas. Der rechnerische Phosphorgehalt im Polyoxyalkylenpolyol gemäß Beispiel 3 betrug 0,714 Gew.-%.

**Beispiel 4, Vergleich:**

In einen 2 l Laborautoklaven wurden unter Stickstoffatmosphäre 752,6 g der Vorstufe gemäß Beispiel D und 26,03 g des Neutralisationsmittels 1 gegeben. Das Gemisch wurde über einen Zeitraum von 0,25 h bei Raumtemperatur gerührt (Kreuzbalkenrührer, 200 U/min). Es wurden sodann 0,120 g DMC-Katalysator zugegeben und der Inhalt des Autoklaven wurde 30 min. bei 130 °C unter Rühren mit 200 U/min. im Vakuum bei einem Druck von ca. 140 mbar unter Einleiten von 50 ml Stickstoff pro Minute über einen unter dem Flüssigkeitsspiegel liegenden Verteilerring gestrippt. Danach wurden, ebenfalls bei 130 °C, aber Rühren mit 800 U/min., insgesamt 447,5 g Propylenoxid in den Gasraum des Autoklaven eindosiert. Der Start der Propylenoxiddosierung erfolgte bei einem Druck von 0,044 bar. Die reine Dosierzeit betrug 5,08 h. Da nach 349,5 g dosiertem Propylenoxid ein Druck von 5,5 bar erreicht worden war, musste die Propylenoxiddosierung für einen Zeitraum von 90 min. unterbrochen werden, bevor die restliche Propylenoxidmenge dosiert werden konnte. Nach einer Nachreaktionszeit von 17,5 h wurde 0,5 h bei 130 °C bei einem absoluten Druck von 1 mbar ausgeheizt, danach auf 80 °C abgekühlt und 0,626 g IRGANOX® 1076 zugegeben. Die OH-Zahl des Produktes betrug 405 mg KOH/g und die Viskosität bei 25 °C 779 mPas. Der rechnerische Phosphorgehalt im Polyoxyalkylenpolyol gemäß Beispiel 4 betrug 1,060 Gew.-%.

**Beispiel 5, erfindungsgemäß:**

In einen 2 l Laborautoklaven wurden unter Stickstoffatmosphäre 750,2 g der Vorstufe gemäß Beispiel C und 1,363 g des Neutralisationsmittels 2 gegeben. Das Gemisch wurde über einen Zeitraum von 0,25 h bei Raumtemperatur gerührt (Kreuzbalkenrührer, 200 U/min). Es wurden sodann 0,136 g DMC-Katalysator zugegeben und der Inhalt des Autoklaven wurde 60 min. bei 130 °C unter Rühren mit 200 U/min. im Vakuum bei einem Druck von ca. 140 mbar unter Einleiten von 50 ml Stickstoff pro Minute über einen unter dem Flüssigkeitsspiegel liegenden Verteilerring gestrippt. Danach wurden, ebenfalls bei 130 °C, aber Rühren mit 800 U/min., 451,8 g Propylenoxid über einen Zeitraum von 5,03 h mit konstanter Dosierrate in den Gasraum des Autoklaven eindosiert. Der Start der Propylenoxiddosierung erfolgte bei einem Druck von 0,050 bar. Der maximale Druck von 2,72 bar wurde nach 185 g dosiertem Propylenoxid erreicht. Nach einer Nachreaktionszeit von 4,0 h wurde 0,5 h bei 130 °C bei einem absoluten Druck von 1 mbar ausgeheizt, danach auf 80 °C abgekühlt und 0,622 g IRGANOX® 1076 zugegeben. Die OH-Zahl des Produktes betrug 394 mg KOH/g und die Viskosität bei 25 °C 751 mPas. Der rechnerische Phosphorgehalt im Polyoxyalkylenpolyol gemäß Beispiel 5 betrug 0,712 Gew.-%.

**Beispiel 6, erfindungsgemäß:**

In einen 2 l Laborautoklaven wurden unter Stickstoffatmosphäre 749,1 g der Vorstufe gemäß Beispiel C und 2,707 g des Neutralisationsmittels 2 gegeben. Das Gemisch wurde über einen Zeitraum von 0,25 h bei Raumtemperatur gerührt (Kreuzbalkenrührer, 200 U/min). Es wurden sodann 0,131 g DMC-Katalysator zugegeben und der Inhalt des Autoklaven wurde 60 min. bei 130 °C unter Rühren mit 200 U/min. im Vakuum bei einem Druck von ca. 140 mbar unter Einleiten von 50 ml Stickstoff pro Minute über einen unter dem Flüssigkeitsspiegel liegenden Verteilerring gestrippt. Danach wurden, ebenfalls bei 130 °C, aber Rühren mit 800 U/min., 451,1 g Propylenoxid über einen Zeitraum von 5,03 h mit konstanter Dosierrate in den Gasraum des Autoklaven eindosiert. Der Start der Propylenoxiddosierung erfolgte bei einem Druck von 0,048 bar. Der maximale Druck von 2,60 bar wurde nach 191 g dosiertem Propylenoxid erreicht. Nach einer Nachreaktionszeit von 4,0 h wurde 0,5 h bei 130 °C bei einem absoluten Druck von 1 mbar ausgeheizt, danach auf 80 °C abgekühlt und 0,619 g IRGANOX® 1076 zugegeben. Die OH-Zahl des Produktes betrug 393 mg KOH/g und die Viskosität bei 25 °C 760 mPas. Der rechnerische Phosphorgehalt im Polyoxyalkylenpolyol gemäß Beispiel 6 betrug 0,711 Gew.-%.

**Beispiel 7, erfindungsgemäß:**

In einen 2 l Laborautoklaven wurden unter Stickstoffatmosphäre 748,9 g der Vorstufe gemäß Beispiel C und 1,881 g des Neutralisationsmittels 1 gegeben. Das Gemisch wurde über einen Zeitraum von 0,25 h bei Raumtemperatur gerührt (Kreuzbalkenrührer, 200 U/min). Es wurden sodann 0,063 g DMC-Katalysator zugegeben und der Inhalt des Autoklaven wurde 60 min. bei 130 °C unter Rühren mit 200 U/min. im Vakuum bei einem Druck von ca. 130 mbar unter Einleiten von 50 ml Stickstoff pro Minute über einen unter dem Flüssigkeitsspiegel liegenden Verteilerring gestrippt. Danach wurden, ebenfalls bei 130 °C, aber Rühren mit 800 U/min., 451,1 g Propylenoxid über einen Zeitraum von 5,02 h mit konstanter Dosierrate in den Gasraum des Autoklaven eindosiert.
Der Start der Propylenoxiddosierung erfolgte bei einem Druck von 0,046 bar. Der maximale Druck von 4,3 bar wurde nach 365 g dosiertem Propylenoxid erreicht*. Nach einer Nachreaktionszeit von 8,0 h wurde 0,5 h bei 130 °C bei einem absoluten Druck von 1 mbar ausgeheizt, danach auf 80 °C abgekühlt und 0,611 g IRGANOX® 1076 zugegeben. Die OH-Zahl des Produktes betrug 396 mg KOH/g und die Viskosität bei 25 °C 719 mPas. Der rechnerische Phosphorgehalt im Polyoxyalkylenpolyol gemäß Beispiel 7 betrug 0,712 Gew.-%.
*Die Halbierung der Katalysatormenge im Vergl. zu Beispiel 1 erklärt das höhere Druckniveau.

**Beispiel 8, Vergleich:**

In einen 2 l Laborautoklaven wurden unter Stickstoffatmosphäre 752,6 g der Vorstufe gemäß Beispiel A und 0,106 g des Neutralisationsmittels 3 gegeben. Das Gemisch wurde über einen Zeitraum von 0,25 h bei Raumtemperatur gerührt (Kreuzbalkenrührer, 200 U/min). Es wurden sodann 0,121 g DMC-Katalysator zugegeben und der Inhalt des Autoklaven wurde 60 min. bei 130 °C unter Rühren mit 200 U/min. im Vakuum bei einem Druck von ca. 140 mbar unter Einleiten von 50 ml Stickstoff pro Minute über einen unter dem Flüssigkeitsspiegel liegenden Verteilerring gestrippt. Danach wurden, ebenfalls bei 130 °C, aber Rühren mit 800 U/min., 447,5 g Propylenoxid über einen Zeitraum von 4,97 h mit konstanter Dosierrate in den Gasraum des Autoklaven eindosiert.
Der Start der Propylenoxiddosierung erfolgte bei einem Druck von 0,045 bar. Der maximale Druck von 4,01 bar wurde nach 321 g dosiertem Propylenoxid erreicht. Nach einer Nachreaktionszeit von 13,5 h wurde 0,5 h bei 130 °C bei einem absoluten Druck von 1 mbar ausgeheizt, danach auf 80 °C abgekühlt und 0,622 g IRGANOX® 1076 zugegeben. Die OH-Zahl des Produktes betrug 396 mg KOH/g und die Viskosität bei 25 °C 728 mPas. Der rechnerische Phosphorgehalt im Polyoxyalkylenpolyol gemäß Beispiel 8 betrug 0,716 Gew.-%.

**Tabelle 1**

| Beispiel | Vorstufe [Beispiel] | Neutralisationsmittel | Oxophosphorsäure, eingesetzt in Vorstufe [%] | DMC-Katalysatorkonzentration bez. auf Endproduktmasse [ppm] | $P_{max}$ in Schritt ii [bar] | OHZ nach Schritt ii [mg KOH / g] |
|---|---|---|---|---|---|---|
| 1 | A | 1 | 3,62 | 103 | 3,29 | 395 |
| 2 (Vgl.) | B | - | 3,62 | 107 | 4,47 | 394 |
| 3* | B | 1 | 3,62 | 103 | 2,85 | 397 |
| 4** (Vgl.) | D | 1 | 5,46 | 98 | 5,5 | 405 |
| 5 | C | 2 | 3,62 | 113 | 2,72 | 394 |
| 6*** | C | 2 | 3,62 | 109 | 2,60 | 393 |
| 7 | C | 1 | 3,62 | 52 | 4,3 | 396 |
| 8 (Vgl.) | A | 3 | 3,62 | 101 | 4,0 | 396 |

* Reaktionstemperatur in Schritt ii) = 140 °C

** Bei 5,5 bar wurde die Epoxiddosierung unterbrochen

*** Die Menge an Neutralisationsmittel 2 wurde gegenüber Beispiel 5 verdoppelt

Man erkennt, dass der Verzicht auf die Neutralisation des Restsäuregehaltes im nach Schritt i-a) erhaltenen Reaktionsprodukt zu einem schlechteren Reaktionsverlauf (höherem Druckniveau während der Epoxiddosierung ) führt, dasselbe gilt für die gezeigten Fälle, in denen eine Vorstufe mit einem nicht erfindungsgemäß hohen Gehalt an Phosphorsäure eingesetzt wurde oder ein Neutralisationsmittel gemäß WO 2012134849 verwendet wurde.

**Patentansprüche**

1. Verfahren zur Herstellung einer Mischung enthaltend ein Polyoxyalkylenpolyol, bevorzugt ein Polyetherpolyol, umfassend folgende Schritte:

   i. Bereitstellung einer Komponente (A), enthaltend ein Polyoxyalkylenpolyol A1) mit einer berechneten Hydroxylzahl ($OHZ_{A1}$) von 600 bis 1060 mg KOH / g durch

      a) Umsetzung einer H-funktionellen Starterverbindung (B) mit einem Alkylenoxid (C) unter Verwendung einer Komponente (D), wobei die Komponente (D) eine Brønsted-Säure enthält, unter Bildung einer Zwischenstufe (E);
      b) Zugabe eines Amins (F) zu der unter i-a) erhaltenen Zwischenstufe (E) unter Bildung der Komponente (A);

   ii. Anschließende Umsetzung der Komponente (A) mit einem Alkylenoxid (G) in Anwesenheit eines DMC-Katalysators (H) zur Mischung enthaltend das Polyoxyalkylenpolyol;

      wobei die Umsetzung in Schritt i.-a) in Abwesenheit einer Supersäure erfolgt,
      und wobei die gemäß Schritt i.-a) zuzugebende, berechnete Menge an Bronsted-Säure von 0,5 Gew.-% - 5,0 Gew.-%, bevorzugt von 1,0 Gew.-% bis 4,5 Gew.-% und besonders bevorzugt von 1,5 Gew.-% bis 4,0 Gew.-% bezogen auf die Gesamtmasse der Zwischenstufe (E) beträgt.

2. Verfahren gemäß Anspruch 1, wobei das in der Mischung enthaltene Polyoxyalkylenpolyol eine Äquivalentmasse von 93 bis 225 g/ mol bevorzugt von 93 bis 190 g/ mol aufweist.

3. Verfahren gemäß Anspruch 1 oder 2, wobei die wobei die Brønsted-Säure eine Sauerstoffsäure des Phosphors ist, bevorzugt Phosphinsäure, Phosphonsäure und/oder Phosphorsäure (ortho-Phosphorsäure), und besonders bevorzugt Phosphorsäure (ortho-Phosphorsäure) ist.

4. Verfahren gemäß einem der Ansprüche 1 bis 4, wobei in Schritt i.-b) die zugegebene Menge des Amins (F) so bemessen wird, dass pro Restsäureäquivalent in Zwischenstufe (E) in Schritt i.-b) ≥ 0,5 bis ≤ 2,2, bevorzugt ≥ 0,8 bis ≤ 2,0 Aminstickstoffäquivalente zugesetzt werden, wobei das Säurerestäquivalent mithilfe der in der Beschreibung offenbarten Methode bestimmt wird.

5. Verfahren gemäß einem der Ansprüche 1 bis 5, wobei das Amin (F) ein tertiäres Amin, bevorzugt ein hydroxygruppenhaltiges tertiäres Amin ist.

6. Verfahren gemäß Anspruch 6, wobei das tertiäre Amin eine Hydroxylzahl von 300 mg KOH/g bis 1200 mg, bevorzugt von 350 mg KOH/g bis 1000 mg KOH/g, besonders bevorzugt von 400 mg KOH/g bis 800 mg aufweist, wobei die Hydroxylzahl mittels der in der Beschreibung offenbarten Methode bestimmt wurde.

7. Verfahren gemäß Anspruch 5 oder 6, wobei das tertiäre Amin ein hydroxygruppenhaltiges tertiäres Amin ist und das hydroxygruppenhaltige tertiäre Amin erhältlich ist, bevorzugt erhalten wird durch Umsetzung von Ammoniak, einem primären Amin, einem primären Diamin, einem sekundären Amin und/oder einem sekundären Diamin mit einem Alkylenoxid (I) und/oder durch Kettenverlängerung von tertiären Alkoholaminen mit einem Alkylenoxid (I).

8. Verfahren gemäß einem der Ansprüche 1 bis 7, wobei Schritt i.-a) bei einer Reaktionstemperatur von kleiner 80 °C, bevorzugt von 30°C bis 70°C und besonders bevorzugt von 35°C bis 65°C durchgeführt wird.

9. Verfahren gemäß einem der Ansprüche 1 bis 8, wobei Schritt i.-a) sowie optional Schritt i.-b), bevorzugt Schritt i.-a) und Schritt i.-b) in einem ersten Reaktor und Schritt ii) in einem zweiten Reaktor durchgeführt wird, wobei der erste Reaktor verschieden vom zweiten Reaktor ist.

10. Verfahren gemäß einem der Ansprüche 1 bis 9, wobei Schritt ii) bei einer Reaktionstemperatur von 135 °C bis 145 °C durchgeführt wird.

11. Zwischenstufe (E) erhältlich nach einem Verfahren gemäß einem der Ansprüche 1 bis 10.

12. Komponente (A) erhältlich nach einem Verfahren gemäß einem der Ansprüche 1 bis 10.

13. Mischung erhältlich nach einem Verfahren gemäß einem der Ansprüche 1 bis 10.

14. Komponente (A) enthaltend ein Polyoxyalkylenpolyol A1) mit einer berechneten Hydroxylzahl ($OHZ_{A1}$) von 600 bis 1060 mg KOH und eine alkoxylierte Sauerstoffsäure des Phosphors, wobei der berechnete Phosphoranteil von 0,16 bis 2,35 Gew.-% bezogen auf die Komponente (A) beträgt.

15. Mischung enthaltend ein Polyoxyalkylenpolyol, bevorzugt ein Polyetherpolyol mit einer Äquivalentmasse von 93 bis 225 g/mol, bevorzugt von 93 bis 190 g/ mol und eine alkoxylierte Sauerstoffsäure des Phosphors, wobei der berechnete Phosphoranteil von 0,065 bis 1,287 Gew.-%, bezogen auf die Mischung, beträgt.

Europäisches
Patentamt

European
Patent Office

Office européen
des brevets

**EUROPÄISCHER RECHERCHENBERICHT**

Nummer der Anmeldung

EP 23 17 2723

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 543 689 A1 (REPSOL SA [ES]) 9. Januar 2013 (2013-01-09) * das ganze Dokument * ───── | 1-15 | INV. C08G65/26 |

RECHERCHIERTE
SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| Den Haag | 6. Oktober 2023 | Hoffmann, Michael |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ...........................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 2723

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2023

| Im Recherchenbericht angeführtes Patentdokument | Datum der Veröffentlichung | Mitglied(er) der Patentfamilie | Datum der Veröffentlichung |
|---|---|---|---|
| EP 2543689 A1 | 09-01-2013 | BR 112014000101 A2 | 14-02-2017 |
| | | CN 103732651 A | 16-04-2014 |
| | | EP 2543689 A1 | 09-01-2013 |
| | | ES 2599073 T3 | 31-01-2017 |
| | | KR 20140047109 A | 21-04-2014 |
| | | PT 2543689 T | 22-09-2016 |
| | | US 2014142271 A1 | 22-05-2014 |
| | | WO 2013004694 A1 | 10-01-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1125961 A1
- EP 2415798 A1
- WO 2016064698 A1
- WO 2017194709 A1
- WO 2012084762 A1
- WO 2017194709 A
- WO 2012134849 A1
- WO 2005118678 A1
- EP 2543689 A
- EP 1525244 A
- US 3538043 A
- US 4500704 A
- US 5032671 A
- US 6646100 A
- EP 222453 A
- WO 2008013731 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 A
- WO 0139883 A
- WO 0180994 A
- WO 9914258 A
- US 4987271 A
- DE 3132258 A
- EP 406440 A
- US 5391722 A
- US 5099075 A
- US 4721818 A
- US 4877906 A
- EP 385619 A
- WO 2012134849 A

**In der Beschreibung aufgeführte Nicht-Patentliteratur**

- **HOLLEMAN-WIBERG.** Lehrbuch der Anorganischen Chemie. Walter de Gruyter, 1985, 646-664
- Ullmann's Encyclopedia of Industrial Chemistry. 1992, vol. B4, 167
- Handbuch Apparate. Vulkan-Verlag, 1990, 188-208